# EUROPÄISCHE PATENTSCHRIFT

(11) **EP 3 189 093 B1**
(45) Veröffentlichungstag und Bekanntmachung des Hinweises auf die Patenterteilung: **02.10.2019**
(21) Anmeldenummer: 15750041.4
(22) Anmeldetag: 11.08.2015
(51) Int. Cl.: C08G 77/46, C08G 65/26, C08G 65/336, C08G 64/34, C08G 64/42

(54) **VERFAHREN ZUR HERSTELLUNG VON HYDROSILYLIERBAREN EUGENOL-POLYETHERN UND EUGENOL-POLYETHERSILOXANEN SOWIE DEREN VERWENDUNG**
PROCESS FOR THE PREPARATION OF EUGENOL POLYETHERS THAT CAN BE HYDROSILYLATED AND EUGENOL POLYETHERSILOXANES AND USE THEREOF
PROCÉDÉ DE FABRICATION DE POLYÉTHERS D'EUGÉNOL POUVANT ÊTRE HYDROSILYLÉS ET POLYÉTHER-SILOXANES D'EUGÉNOL ET UTILISATION DES POLYÉTHER-SILOXANES D'EUGÉNOL

(30) Priorität: 05.09.2014 DE 102014217790
(43) Veröffentlichungstag der Anmeldung: 12.07.2017
(73) Patentinhaber: Evonik Degussa GmbH, 45128 Essen (DE)
(72) Erfinder: LOBERT, Matthias, 45309 Essen (DE); FERENZ, Michael, 45147 Essen (DE); ROLAND, Katrin, 45257 Essen (DE); SCHIERLE, Thorsten, 45289 Essen (DE)
(74) Vertreter: Evonik Patent Association
(86) Internationale Anmeldenummer: PCT/EP2015/068438
(87) Internationale Veröffentlichungsnummer: WO 2016/034375

(56) Entgegenhaltungen:
- EP-A1- 1 717 259
- EP-A2- 2 011 813
- US-A1- 2009 318 635
- SARGENT J R ET AL: "END GROUP ANALYSIS ACCOUNTS FOR THE LOW MOLECULAR WEIGHT OBSERVED IN THE 1,3-DIVINYLTETRAMETHYLDISILOXANE-PT COMPLEX CATALYZED HYDROSILYLATION COPOLYMERIZATION OF ALPHA, OMEGA-DIENES AND 1,3-DIHYDRIDOTETRAMETHYLDISILOXANE. ALPHA, OMEGA-DIENES AND", MACROMOLECULES, AMERICAN CHEMICAL SOCIETY, US, Bd. 32, Nr. 9, 4. Mai 1999 (1999-05-04), Seiten 2826-2829, XP000824212, ISSN: 0024-9297, DOI: 10.1021/MA981461W

## Beschreibung

Die vorliegende Erfindung betrifft ein Verfahren zur Herstellung von hydrosilylierbaren Eugenol-basierten Polyethern, deren Umsetzung zu Polyethersiloxanen, sowie die Produkte, die nach diesem Verfahren hergestellt werden können und deren Verwendung als grenzflächenaktive Substanzen.

Polyether und Polyethersiloxane finden häufig Verwendung als Additiv zur Herstellung oder Bedruckung von Lebensmittelverpackungen. Gerade in diesem Bereich existieren sehr hohe Anforderungen an die eingesetzten Stoffe hinsichtlich Ihrer Migrierfähigkeit in das Lebensmittel. Um eine Aufnahme derartiger Stoffe in den menschlichen Körper zu vermeiden, dürfen diese gar nicht oder nur geringfügig migrierfähig sein. Demzufolge wird bereits bei der Synthese der Basiskomponente Polyether detailliert auf den Einsatz toxikologisch unbedenklicher Ausgangsmaterialen, insbesondere der alkoholischen Starter gelegt. Insbesondere wichtig ist, dass die Ausgangsmaterialien, falls sie in der Reaktion zum Polyether nicht vollständig umgesetzt werden und damit noch im Produkt vorhanden sind in kleinen Mengen nicht toxisch sind und eine geringe Migration in die Lebensmittel aufweisen.

Aufgabe der vorliegenden Erfindung war es daher, Polyether, welche die engen Vorgaben für Additive mit Lebensmittelkontakt erfüllen, bereit zu stellen die gleichzeitig stabile, homogene Verbindungen sind und reaktive Gruppen tragen, die gegebenenfalls eine Weiterreaktion zum Polyethersiloxan ermöglichen.

Viele der bei der DMC-katalysierten Herstellung von Polyethern üblicherweise eingesetzten alkoholischen Starter erfüllen allerdings das Kriterium der Lebensmittelkonformität und der geringen Migration gar nicht oder nur bedingt.

Überraschenderweise wurde nun gefunden, dass der Einsatz von Eugenol als Starter bei der DMC-katalysierten Herstellung von Polyethern zu Produkten führt, welche besonders homogen sind, eine geringe Molmassenverteilung aufweisen und die außerordentlich stabil sind. Zur Beurteilung der Stabilität gehört insbesondere die Tatsache, dass der Einsatz von Eugenol als Starter zu einem Polyether führt, dessen endständige Doppelbindung fast vollständig erhalten bleibt, der also keiner Umlagerung zum Isoeugenol unterliegt. Dies hat enorme Vorteile, da der Erhalt der terminalen Doppelbindung unzählige weitere chemische Reaktionen ermöglicht, insbesondere die Hydrosilylierung an Si-H funktionelle Siloxane.

Grenzflächenaktive Polyether, die auf aromatischen Alkoholen, sprich Phenolen, als Starter beruhen, sind hinlänglich bekannt wie zum Beispiel in US 5296627 A oder US 6646091 B2 beschrieben.

Auch die basisch katalysierte Alkoxylierung von Eugenol ist prinzipiell bekannt. So erwähnt Moustapha et al. in Egyptian J. Chem. 2005, 48 (3), 273-285 die mit Natriummetall katalysierte Ethoxylierung von Eugenol. Das Produkt wird nicht näher charakterisiert und lediglich als Lösemittel für Silber-Alken-Komplexe bei gaschromatographischen Untersuchungen eingesetzt.

Die Schriften EP 94386 B1 und DE 3342509 A1 beschreiben Zusammensetzungen, welche Eugenol-basierte Polyether enthalten.

US 2009/0318635 A1 beschreibt eine thermoplastische Zusammensetzung mit einem Eugenol-basierten Polyarylenether-Polysiloxan Blockcopolymer.

Eine erstmalige detaillierte Beschreibung der alkalisch katalysierten Alkoxylierung von Eugenol wird in EP 1717259 A1 beschrieben. In den dort ausgeführten Beispielen wird Eugenol als Starter vorgelegt und zunächst mit einem alkalischen Katalysator wie Natriummethylat versetzt. Nach Entfernung des Methanols aus diesem Katalyseschritt werden bei Temperaturen von 140-160°C Ethylen-, Propylen- und/oder Butylenoxid angelagert. Diese Verfahrensweise führt nachweislich zu reinen Isoeugenol-basierten Polyethern, sprich die Allyl-Gruppe des Eugenols lagert während der alkalischen Alkoxylierung quantitativ in eine 2-Propenyl-Gruppe um. Die so resultierende Struktureinheit ist dem Fachmann unter dem Namen Isoeugenol bekannt.

Luinstra et al. beschreiben in Macromol. Symp. 2010, 293, 15-19 auch Polyetherähnliche Strukturen, bei denen die Eugenol-Allylgruppe stabil bleibt, um diese einer ADMET-Polymerisation zu unterziehen. Sie bedienen sich hier einer Substitutionsreaktion von Diethylenglycolditosylat mit zwei Mol Eugenol. Ein Eugenol-haltiges Polymer wird jedoch nicht beschrieben.

Auch Polyethersiloxane die Eugenol-Gruppen tragen sind prinzipiell aus der wissenschaftlichen Literatur bekannt und können nach drei Syntheseprinzipien erhalten werden.

Die Patentanmeldung JP 11158266 A sowie das erteilte Patent EP 2134771 B1 beschreiben die Inkorporation von Eugenol in das Polyethersiloxan-Rückgrat durch Äquilibrierung von Eugenol-verkapptem Polysiloxan mit Wasserstoff-tragenden cyclischen Hydrosiloxanen wie z.B. D₄H.

Eine besonders elegante Methode zur Einführung einer Eugenol-Einheit in ein Polyethersiloxan-Gerüst wird in Patent US 6313329 B1 offenbart. Hier wird unter Pt-Katalyse zunächst an ein SiH-tragendes Polysiloxan ein herkömmlicher terminal ungesättigter Polyether gemeinsam mit Undecylensäuremethylester hydrosilyliert und in einem nachfolgenden Schritt wird unter Methanol-Abspaltung eine Umesterung des Polysiloxan-gebundenen Methylesters mit dem phenolischen Sauerstoff durchgeführt. Die zu erwartende Instabilität des resultierenden Phenol-Esters in wässrigen Systemen wird den kommerziellen Nutzen derartiger Produkte vermutlich jedoch stark einschränken.

Am verbreitetsten, weil technisch am vorteilhaftesten umsetzbar, ist die, meist mittels Pt-Verbindungen katalysierte, hydrosilylierende Verknüpfung der Allylgruppe des Eugenols an Si-H-funktionelle Polysiloxane.
So beschreibt das erteilte Patent EP 818495 B1 triazin-funktionelle Polyethersiloxane, welche auch Eugenol-Einheiten enthalten zur permanenten Ausstattung von Textilen und Leder.

In den meisten Fällen werden neben Eugenol auch herkömmliche terminal ungesättigte Polyether wie z.B. Alkoxylate von Allylalkoholen an die SiH-tragenden Alkyl-Polysiloxane hydrosilyliert, in einzelnen Fällen auch zusätzlich noch mit weiteren terminal ungesättigten Verbindungen wie z.B. Alkenen. Wie in EP 1010748 B1, EP 887367 A3 oder EP 845520 B1 beschrieben werden derartige Eugenolenthaltende Polyethersiloxane als Dieselentschäumer eingesetzt.

Als weiteres breites Einsatzgebiet haben sich kosmetische Formulierungen erwiesen, wo derartige Polyethersiloxane als Zusatzstoffe eingesetzt werden, wie in EP 1260552 B1, US 6346595 B1, EP 916689 B1 oder US 7287784 B2 beschrieben.

Im Jahr 2011 sind auch Polyglycerin-haltige Polyethersiloxane beschrieben worden, die zumindest teilweise Polymer-gebunde Eugenol-Einheiten enthalten. In den Anmeldungen EP 2492301 A1 und EP 2492333 A1 werden Polyglycerinallylether gemeinsam mit Eugenol-Glycidol-Addukten an SiH-tragende Polyethersiloxane hydrosilyliert. Derartige hydrophile Polysiloxane können als Verdicker oder Emulgator eingesetzt werden.

Die im Stand der Technik mittels Hydrosilylierung beschriebene Herstellung von Polyethersiloxanen, welche Eugenol- und Polyether-Gruppen tragen, hat den verfahrenstechnischen Nachteil, dass gleichzeitig mehrere ungesättigte Produkte an das SiH-tragende Polyethersiloxan angelagert werden müssen. Da sich die Reaktanden wie Eugenol und der oder die anzulagernden Polyether (und natürlich auch das SiH-tragende Polysiloxan) sowohl durch ihr Molekulargewicht als auch durch ihre hydrophilen bzw. hydrophoben Charaktere signifikant unterscheiden, wird die Herstellung eines einheitlich zusammengesetzten Polyethersiloxans in dem die unterschiedlichen Reaktanden gleichmäßig auf alle Siloxanketten verteilt sind erschwert. Mangelhafte Durchmischung führt so schnell zu inhomogen zusammengesetzten Produkten, was aus Qualitäts- und Kostengründen unbedingt vermieden werden sollte.

Der Einsatz von Lösemitteln zur Homogenisierung des Reaktionsmediums ist sicherlich denkbar, aber kosten- und verfahrenstechnisch von Nachteil, da das zugesetzte Lösemittel nach der Hydrosilylierung in einem weiteren Verfahrensschritt erst wieder entfernt werden muss.

Demnach erschien es also zweckmäßig zu versuchen den aromatischen Charakter des hydrosilylierfähigen Eugenols mit dem flexibel einstellbaren hydrophilen bzw. hydrophoben Charakter eines Polyethers in einem Molekül/Polymer zu kombinieren und dieses anschließend mit einem geeigneten Polyethersiloxan ohne Einsatz eines Lösungsmittels zur hydrosilylierenden Umsetzung zu bringen.

Da die alkalisch katalysierte Alkoxylierung von Eugenol nachweislich zu Isoeugenol-basierten Polyethern führt (*vide infra*)*,* können derartige Polyether nicht an SiH-tragende Polysiloxane hydrosilyliert werden. Wie allgemein bekannt sind 2-Propenyl-Gruppen einer hydrosilylierenden Umsetzung nicht zugänglich.

Es war also eine Aufgabe der vorliegenden Erfindung hydrosilylierfähige Alkoxylierungsprodukte auf Basis von Eugenol als Starter herzustellen, bei denen die Allyl-Gruppe intakt und somit hydrosilylierfähig bleibt.

Überraschenderweise wurde gefunden, dass sich Eugenolpolyether-basierte Polyethersiloxane, auf einfache Weise durch ein Verfahren herstellen lassen, welches Schritt 1 Herstellung von Eugenol-basierten Polyethern und Schritt 2 Umsetzung der SiH-funktionellen Siloxane mit mindestens einem Eugenol-basierten Polyether aus Schritt 1 unter Ausbildung von mindestens einer SiC-Verknüpfung, umfasst.

Unter Eugenol-basiertem Polyether wird erfindungsgemäß ein Polyether aus mindestens drei Alkoxyeinheiten verstanden, der mit Eugenol als alkoholischem Starter hergestellt wurde.
Gegenstand der vorliegenden Erfindung ist ein Verfahren zur Herstellung von Alkoxylierungsprodukten wobei mindestens ein Epoxid in Gegenwart von mindestens einem Übergangsmetall-Katalysator mit Eugenol umgesetzt wird.
Bevorzugt ist der Übergangsmetall-Katalysator ein Doppelmetallcyanid-Katalysator.

Dass das Eugenol in dem erfindungsgemäßen Verfahren als Starter für Alkoxylierungsreaktionen eingesetzt werden kann, um definierte hydrosilylierfähige Produkte zu erhalten, ist sehr überraschend, da die im Stand der Technik bekannten Verfahren unter Einsatz von Eugenol zahlreiche Nachteile aufweisen (*vide infra*)*.* Insbesondere überraschend ist die Tatsache, dass ausgerechnet Eugenol, ein mehrfach substituierter aromatischer und alkoholischer (phenolischer) Starter, gut geeignet ist, um Alkoxylierungsprodukte herzustellen, die recht enge, nur geringfügig bis fast keine bimodale Molekulargewichtsverteilungen aufweisen.
Umfangreiche Arbeiten mit anderen aromatischen und alkoholischen Startern, wie beispielsweise Guajacol (CAS 90-05-1) und 2-Naphthol (CAS 135-19-3) an Stelle von Eugenol in dem erfindungsgemäßen Verfahren zeigen GPCs die eine deutlich bimodalere Verteilung aufweisen. Das angestrebte Molgewicht wurde in beiden Fällen auch gemäß OH-Zahl nicht erreicht. Hauptbestandteil war gemäß MALDI-Tof-Analysen, das Zielmolekül, an das weniger Mole Propylenoxid angelagert wurden als angestrebt. Daneben war ein hochmolekularer Peak im GPC zu beobachten, der einem Produkt mit ungefähr doppeltem Molgewicht zugeordnet werden konnte.
Diese Beobachtung verleitet den Fachmann anzunehmen, dass ein mehrfach substituierter Phenolrest wie beim 2-Naphthol, wo der Phenolring in *meta-* und *para-*Position den annelierten zweiten Phenylrest trägt, oder ein zweiter Substituent am Phenylrest, wie im Guajacol in ortho-Position zur Hydroxygruppe vorhanden, die Einsetzbarkeit derartiger Starter limitiert. Umso überraschender ist das Ergebnis, dass bei einem Einsatz von 5-Allylguajacol, auch bekannt unter dem Namen Eugenol, das einen zur Hydroxygruppe des Phenolrings *ortho*-ständigen Methoxyrest und einen para-ständigen Allylrest aufweist, die Einsetzbarkeit als Starter in dem erfindungsgemäßen Verfahren durchaus wieder gegeben ist. Die OH-Zahl entspricht den Erwartungen und im GPC ist nur der Ansatz einer Schulter zu höherem Molgewicht zu erkennen. Weitere Details sind dem experimentellen Teil zu entnehmen.

In einem besonders bevorzugten erfindungsgemäßen Verfahren wird in einem ersten Schritt mindestens ein Epoxid in Gegenwart von mindestens einem Übergangsmetall-Katalysator und optional weiteren Komponenten mit Eugenol umgesetzt und in einem zweiten Schritt erfolgt mindestens eine Umsetzung des Produktes aus Schritt 1 mit Si-H funktionellen Siloxanen. Besonders bevorzugt erfolgt in dem zweiten Schritt eine Umsetzung des Produktes aus Schritt 1 und weiteren Komponenten mit einer terminal ungesättigten Gruppe mit Si-H funktionellen Siloxanen.
Besonders bevorzugt ist ein Verfahren zur Herstellung von Eugenolpolyether-basierten Polyethersiloxanen, das Schritt 1 Herstellung von Eugenol-basierten Polyethern und Schritt 2 Umsetzung der SiH-funktionellen Siloxane mit mindestens einem Eugenol-basierten Polyether aus Schritt 1 unter Ausbildung von mindestens einer SiC-Verknüpfung, aufweist. Die so hergestellten erfindungsgemäßen Produkte eignen sich ganz besonders hervorragend als grenzflächenaktive Substanz und sind sehr gute Dispergiermittel.

Die Bezeichnung "Eugenol-basierter Polyether" steht erfindungsgemäß für einen Polyether, der nach dem erfindungsgemäßen Verfahren hergestellt werden kann. In diesem Verfahren wird Eugenol dergestalt alkoxyliert, dass während der Reaktion Eugenol nicht in Isoeugenol umlagert, d.h. die Allyl-Gruppe des Eugenols nicht in eine 2-Propenylgruppe umgelagert wird.
Im Rahmen der vorliegenden Erfindung umfasst der Begriff Alkoxylierungsprodukte oder Polyether sowohl Polyether, Polyetherole, Polyetheralkohole, Polyetheresterole aber auch Polyethercarbonatole, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Die Bezeichnung "Eugenol-basierter Polyether" beschreibt demnach nicht exklusiv Alkoxylate, sondern umfasst auch Umsetzungsprodukte von Eugenol, wo neben Alkylenoxiden weitere unter Ringöffnung (co)polymerisierbare Monomere umgesetzt werden, wie im Folgenden näher ausgeführt.
Ebenfalls Gegenstand der vorliegenden Erfindung sind Produkte des erfindungsgemäßen Verfahrens der nachfolgend beschriebenen Formel (I), sowie deren Verwendung als grenzflächenaktive Substanzen.

Ebenfalls Gegenstand der vorliegenden Erfindung sind Produkte des erfindungsgemäßen Verfahrens der nachfolgend beschriebenen Formel (II), sowie deren Verwendung als grenzflächenaktive Substanzen.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Bei Prozentangaben handelt es sich, wenn nicht anders angegeben, um Angaben in Gewichtsprozent. Sind nachfolgend Messwerte angegeben, so sind diese Messungen, wenn nicht anders angegeben bei Normalbedingungen (25 °C und 1013 mbar) durchgeführt worden. Werden nachfolgend Mittelwerte angegeben, so handelt es sich, wenn nicht anderes angegeben, um Gewichtsmittel.

Das erfindungsgemäße Verfahren zur Herstellung von Eugenolpolyether-basierten Polysiloxanen, zeichnet sich vorzugsweise dadurch aus, dass es die folgenden Schritte aufweist:
1. Herstellung von Polyethern **wobei mindestens ein Epoxid in Gegenwart von mindestens einem Übergangsmetall-Katalysator mit Eugenol umgesetzt wird,**
2. Umsetzung von SiH-funktionellen Siloxanen mit den Eugenol-basierten Polyethern aus Schritt 1 unter Ausbildung von mindestens einer SiC-Verknüpfung.
Es hat sich gezeigt, dass es mit Hilfe der erfindungsgemäßen Polyether aus Schritt 1 möglich ist einen geringeren Überschuss an Polyether für die Umsetzung in Schritt 2 einzusetzen um hohe SiH-Umsätze zu erzielen als dies bei gängigen Polyethern, zum Beispiel bei allyl-funktionalisierten Polyethern, der Fall ist. Dies bedeutet, dass weniger freier Polyether im Produkt verbleibt. Das erzielen höherer Umsätze ist ein weiterer wichtiger Vorteil gegenüber gängigen Polyethersiloxanen.

Die erfindungsgemäßen Eugenol-basierten Polyether, weisen vorzugsweise die in Formel (I) dargestellte Konstitution auf: 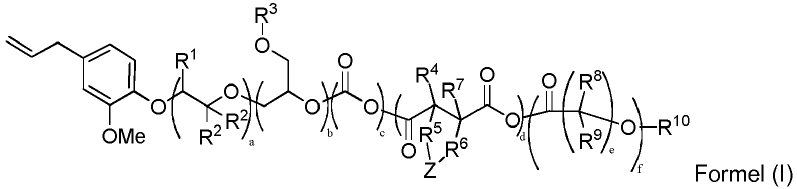 wobei
- a =: 1 bis 1000, bevorzugt 2 bis 500, besonders bevorzugt 3 bis 500, weiter bevorzugt größer 3 bis 100, insbesondere bevorzugt 4 bis 50,
- b =: 0 bis 1000, bevorzugt 1 bis 500, weiter bevorzugt größer 1 bis 200, insbesondere bevorzugt 0 bis 50,
- c =: 0 bis 1000, bevorzugt 1 bis 100, weiter bevorzugt größer 1 bis 80, insbesondere bevorzugt 0 bis 50,
- d =: 0 bis 1000, bevorzugt 1 bis 100, weiter bevorzugt größer 1 bis 80, insbesondere bevorzugt 0 bis 50
- e =: 1 bis 10,
- f =: 0 bis 500, bevorzugt 1 bis 300, besonders bevorzugt 2 bis 200 und insbesondere bevorzugt 0 bis 100 ist,
mit der Maßgabe, dass die Summe aus a + b + c + d + f größer gleich 3 sein muss und
mit der Maßgabe, dass die Gruppen mit den Indices a, b, c, d, und f frei permutierbar über die Molekülkette sind, wobei die Gruppen mit den Indices c und d jeweils nicht auf sich selbst oder auf die jeweils andere Gruppe folgen dürfen
und mit der Maßgabe, dass die verschiedenen Monomereinheiten sowohl der Fragmente mit den Indices a, b und f untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices c und d jeweils nicht auf sich selbst oder auf die jeweils andere Gruppe folgen dürfen,
und wobei
- R¹ =: unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
- R² =: unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-, oder
- R¹: und einer der Reste R² können gemeinsam einen Ring bilden, der die Atome, an die R¹ und R² gebunden sind, einschließt, bevorzugt enthält dieser Ring 5 bis 8 Kohlenstoffatome,
- R³ =: unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist, beispielsweise kann R³ auch eine Silyl-, eine Alkoxysilyl- oder eine Carbonsäureester-Gruppe enthalten, wie beispielsweise eine Dialkoxyalkylsilylgruppe oder eine Trialkoxysilylgruppe, bevorzugt eine Trimethoxysilylgruppe, eine Triethoxysilylgruppe, eine Dimethoxymethylsilylgruppe oder eine Diethoxymethylsilylgruppe,
- R⁴, R⁷ =: unabhängig voneinander Wasserstoff und/oder ein organischer Rest, bevorzugt Alkyl-, Alkenyl-, Alkyliden, Alkoxy-, Aryl- und/oder Aralkylgruppen, oder gegebenenfalls können R⁴ und/oder R⁷ auch nicht vorhanden sein, wobei wenn R⁴ und R⁷ nicht vorhanden sind, statt der Reste R⁴ und R⁷ eine C=C Doppelbindung vorhanden ist,
das überbrückende Fragment Z kann vorhanden oder nicht vorhanden sein,
ist das überbrückende Fragment Z nicht vorhanden so sind,
- R⁵, R⁶ =: unabhängig voneinander Wasserstoff und/oder ein organischer Rest, bevorzugt Alkyl-, Alkenyl-, Alkyliden, Alkoxy-, Aryl- und/oder Aralkylgruppen, wobei für den Fall, dass einer der Reste R⁴ oder R⁷ nicht vorhanden ist, der jeweilige geminale Rest (also R⁵ wenn R⁴ nicht vorhanden ist und R⁶ wenn R⁷ nicht vorhanden ist) ein Alkylidenrest, bevorzugt Methyliden (=CH₂), ist,
ist das überbrückende Fragment Z vorhanden, so sind
- R⁵, R⁶ =: Kohlenwasserstoffreste, die cycloaliphatisch oder aromatisch über das Fragment Z verbrückt sind, wobei Z einen divalenten Alkylen- oder Alkenylenrest darstellt, der weiter substituiert sein kann,
- R¹⁰ =: unabhängig voneinander ein Wasserstoffradikal oder eine Alkylgruppe mit 1 bis 8 Kohlenstoffatomen oder eine Estergruppe -C(O)-R¹¹ oder eine Acetoacetatgruppe -C(O)-CH₂-C(O)-R¹² oder eine Silylethergruppe -Si(R¹³)₃ oder eine Urethangruppe -C(O)-N-(R¹⁴)₂ mit
- R¹¹, R¹², R¹³ =: unabhängig voneinander eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe, und
- R¹⁴ =: unabhängig voneinander Wasserstoff und/oder eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe,
bevorzugt handelt es sich bei R¹⁰ um Wasserstoff, eine Methylgruppe, einen AcetylGruppe oder eine Acetoacetat-Gruppe, insbesondere bevorzugt um Wasserstoff oder eine Acetylgruppe.

Die Eugenol-basierten Polyether der allgemeinen Formel (I) weisen vorzugsweise mindestens ein Fragment des Index a auf, besonders bevorzugt mindestens zwei unterschiedliche Fragmente des Index a auf.

Als Starter für die Alkoxylierungsreaktion wird Eugenol eingesetzt, welches, nach Deprotonierung zu dem in Formel (I) gezeigten Fragment links von Fragment a führen kann.

Bei Eugenol (CAS-Nummer 97-53-0) handelt es sich um ein Allyl-substituiertes Phenol, welches unter den chemischen Bezeichnungen 4-Allyl-2-methoxyphenol, 4-Prop-2-enyl-2-methoxyphenol, 4-Allylbrenzcatechin-2-methylether oder auch 5-Allylguajacol bekannt ist. Es handelt sich um einen natürlichen Rohstoff, welcher ein Hauptbestandteil von Gewürznelkenöl und Pimentöl ist. Eugenol kann durch wässrige alkalische Behandlung (Ausschütteln) von Nelkenöl gewonnen werden. Dieser nachhaltige Ursprung des Rohstoffs Eugenol und der daraus resultierende Verzicht auf petrochemisch hergestellte Rohstoffe stellt unter ökologischen Gesichtspunkten einen wesentlichen Vorteil dar, insbesondere wenn man des Weiteren berücksichtigt, dass Eugenol nicht in Konkurrenz zu einer Nutzung als Nahrungsmittel steht.

Als Alkylenoxide können generell alle dem Fachmann bekannten Alkylenoxide, rein oder in beliebigen Mischungen, eingesetzt werden. Einsetzbare Alkylenoxidverbindungen, die zu den in Formel (I) angegebenen Fragmenten mit dem Index a führen, sind z.B. Ethylenoxid, 1,2-Epoxypropan (Propylenoxid), 1,2-Epoxy-2-methylpropan (Isobutylenoxid), Epichlorhydrin, 2,3-Epoxy-1-propanol, 1,2-Epoxybutan (Butylenoxid), 2,3-Epoxybutan, 2,3-Dimethyl-2,3-epoxybutan, 1,2-Epoxypentan, 1,2-Epoxy-3-methylpentan, 1,2-Epoxyhexan, 1,2-Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxylisopropylether, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-1,2-epoxypropan, 3-(Perfluoroethyl)-1,2-epoxypropan, 3-(Perfluorobutyl)-1,2-epoxypropan, 3-(Perfluorohexyl)-1,2-epoxypropan, 4-(2,3-Epoxypropyl)morpholin, 1-(Oxiran-2-ylmethyl)pyrrolidin-2-on. Bevorzugt eingesetzt werden Ethylenoxid, Propylenoxid, Butylenoxid und Styroloxid. Besonders bevorzugt werden Ethylenoxid und Propylenoxid eingesetzt. In einer ganz besonders bevorzugten Ausführungsform werden Ethylenoxid und Propylenoxid in einem Molaren-Verhältnis von 1 : 3 bis 3 : 1, bevorzugt von 1 : 2 bis 1 : 1 eingesetzt.

Als Glycidylether, welche zu den in Formel (I) angegebenen Fragmenten mit dem Index b führen, können generell alle dem Fachmann bekannten Glycidylether, rein oder in beliebigen Mischungen, eingesetzt werden.
Bevorzugt können Methyl-, Ethyl-, Propyl-, Butyl-, iso-Butyl-, tert-Butyl-, 2-Pentyl-, 3-Pentyl-, 2-Methylbutyl-, 3-Methylbutyl-, 2-Methyl-2-butyl-, 3-Methyl-2-butyl-, 2,2-Dimethylpropyl-, Hexyl-, Heptyl-, Octyl-, 2-Ethylhexyl-, 2-Propylheptyl-, 2-Butyloctanyl-, 2-Methylundecyl-, 2-Propylnonyl-, 2-Ethyldecyl-, 2-Pentylheptyl-, 2-Hexyldecyl-, 2-Butyltetradecyl-, 2-Dodecylhexadecyl-, 2-Tetradecyloctadecyl-, 3,5,5-Trimethylhexyl-, Isononanyl-, Isotridecyl-, Isomyristyl-, Isostearyl-, 2-Octyldodecyl-Triphenylmethyl-, C(O)-(CH₂)₅-C-(CH₃)₃- (Rest der Neodecansäure), C₁₂/C₁₄-Alkyl-, Phenyl-, Kresyl-, tert-Butylphenyl- oder Benzylglycidylether eingesetzt werden, sowie auch 3-Glycidyloxypropyltrimethoxysilan, 3-Glycidyloxypropyltriethoxysilan, 3-Glycidyloxypropyltripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropyl-methyl-dimethoxysilan, 3-Glycidyloxypropyl-ethyl-diethoxysilan. Besonders bevorzugt können 2-Ethylhexyl-, Neodecansäure-, C₁₂/C₁₄-Alkyl-, Kresyl-, tert-Butylphenylglycidylether, ganz besonders bevorzugt eine tert-Butylphenyl- oder Kresylglycidylether eingesetzt werden.

Als Glycidylether können auch polyfunktionelle Glycidylether wie 1,4-Butandioldiglycidylether, 1,6-Hexandioldiglycidylether, Cyclohexandimethanoldiglycidylether, Neopentylglykoldiglycidylether, Polyethylenglykoldiglycidylether, Polypropylenglykoldiglycidylether, Polyglycerin-3-Glycidether, Glycerintriglycidether, Trimethylolpropantriglycidylether oder Pentraerythrittetraglycidylether eingesetzt werden, wodurch auch verzweigte Strukturelemente in das finale Alkoxylierungsprodukt der Formel (I) eingebracht werden können.

Um die in Formel (I) angegebenen Fragmente mit dem Index c in den Polyether einzuführen, kann eine Copolymerisation mit CO₂ durchgeführt werden.

Als cyclische Anhydride, welche zu den in Formel (I) angegebenen Fragmenten mit dem Index d führen, können generell alle dem Fachmann bekannten cyclischen Anhydride, rein oder in beliebigen Mischungen, eingesetzt werden. Als gesättigte, ungesättigte oder aromatische cyclische Dicarbonsäureanhydride, können bevorzugt Bernsteinsäureanhydrid, Oct(en)yl-, Dec(en)yl- und Dodec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid sowie polyfunktionelle Säureanhydride wie Pyromellit-Dianhydrid, Benzophenon-3,3',4,4'-tetracarbonsäure-Dianhydrid, 1,2,3,4-Butantetracarbonsäuredianhydrid oder radikalisch polymerisierte Homo- oder Copolymerisate von Maleinsäureanhydrid mit Ethylen, Isobutylene, Acrylnitril, Vinylacetat oder Styrol eingesetzt werden.
Besonders bevorzugt werden Bernsteinsäureanhydrid, Maleinsäureanhydrid, Phthalsäureanhydrid, und Hexahydrophthalsäureanhydrid eingesetzt, insbesondere Maleinsäureanhydrid und Phthalsäureanhydrid.

Als Lactone, welche zu den in Formel (I) angegebenen Fragmenten mit dem Index f führen, können generell alle dem Fachmann bekannten Lactone, rein oder in beliebigen Mischungen, eingesetzt werden.
Bevorzugt können Valerolactone oder Caprolactone eingesetzt werden, die beide unsubstituiert oder mit Alkylgruppen, bevorzugt Methylgruppen, substituiert sein können. Vorzugsweise können ε-Caproiacton oder δ-Valerolacton eingesetzt werden, insbesondere ε-Caprolacton.

Die Alkoxylierung von OH-funktionellen Startverbindungen kann sowohl unter Basen-, Säuren- oder Übergangsmetall-Katalyse erfolgen. Wie eingangs erwähnt scheidet für die Alkoxylierung von Eugenol ein Einsatz von basischen Katalysatoren aus, da sonst eine Umlagerung zu Isoeugenol erfolgt.

Im Schritt 1 des erfindungsgemäßen Verfahrens zur Herstellung von Eugenol-basierten Polyethern kann eine Alkoxylierung von Eugenol in Anwesenheit von Übergangsmetall-Katalysatoren durchgeführt werden. Bevorzugt wird die Alkoxylierung in Anwesenheit von Doppelmetallcyanid-(DMC)-Katalysatoren durchgeführt.

Die Herstellung und Verwendung von DMC-Katalysatoren für Alkoxylierungsreaktionen ist seit den 1960er Jahren bekannt und werden zum Beispiel in US 3,427,256, US 3,427,334, US 3,427,335, US 3,278,457, US 3,278,458 oder US 3,278,459 dargestellt. Noch wirksamere DMC-Katalysatoren, im speziellen Zink-Cobalt-Hexacyanokomplexe wurden in der Folgezeit entwickelt, z.B. in US 5,470,813 und US 5,482,908 sowie EP 1276563 B1.

Als Doppelmetallcyanidkatalysatoren (DMC-Katalysatoren) werden im erfindungsgemäßen Verfahren vorzugsweise die in EP 1276563 B1 beschriebenen, insbesondere die dort als bevorzugt bzw. besonders bevorzugt beschriebenen DMC-Katalysatoren eingesetzt.

Im Folgenden werden die beiden Schritte des erfindungsgemäßen Verfahrens detaillierter beschrieben.

### Schritt 1:

Im ersten Schritt des erfindungsgemäßen Verfahrens zur Herstellung von Eugenol-basierten Polyethern wird eine DMC-katalysierte Alkoxylierung des Starters Eugenol mit Epoxid-Gruppen aufweisenden Verbindungen (Alkylenoxiden und Glycidylethern) durchgeführt. Alle Verfahrensschritte können bei identischen oder verschiedenen Temperaturen ausgeführt werden.
Zum Starten der Alkoxylierungsreaktion nach erfindungsgemäßem Verfahren wird das Startgemisch, bestehend aus Eugenol und dem Doppelmetallcyanid-Katalysator im Reaktor vorgelegt.
Im Reaktionsgemisch liegt die Katalysatorkonzentration vorzugsweise bei > 0 bis 1.000 wppm (Massen-ppm), bevorzugt bei > 0 bis 500 wppm, besonders bevorzugt bei 0,1 bis 400 wppm und ganz besonders bevorzugt bei 10 bis 300 wppm. Diese Konzentration ist dabei bezogen auf die Gesamtmasse der entstehenden Alkoxylierungsprodukte.
Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Als Suspensionsmittel können entweder ein inertes Lösungsmittel benutzt werden oder vorteilhaft auch Eugenol, oder alternativ ein Gemisch aus beiden Komponenten.

Die im Reaktor zum Reaktionsstart vorgelegte Startmischung aus Starter (Eugenol), DMC-Katalysator und gegebenenfalls Suspensionsmittel kann vor Beginn der Monomerdosierung gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Der vorgelegten Startmischung wird Propylenoxid oder zumindest eine andere Epoxidverbindung zudosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Das molare Verhältnis von Epoxid zu Eugenol, liegt in der Startphase dabei vorzugsweise zwischen 0,1 zu 1 bis 15 zu 1, bevorzugt zwischen 0,2 zu 1 bis 10 zu 1, insbesondere zwischen 0,4 zu 1 bis 5 zu 1.
Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist. Bei nicht gasförmigen Alkylenoxiden und Glycidylethern/-estern wird das Anspringen der Reaktion durch die einsetzende Wärmetönung angezeigt.

Nach der Startphase, also nach Initialisierung der Reaktion, kann je nach angestrebter Molmasse weiteres Alkylenoxid zudosiert werden. Alternativ kann auch ein beliebiges Gemisch von unterschiedlichen Alkylenoxidverbindungen und Glycidylethern/-estern addiert werden, wobei diese auch separat in beliebiger Reihenfolge nacheinander addiert werden können.
Die Umsetzung kann z.B. zwecks Viskositätserniedrigung des Reaktionsgemisches in einem inerten Lösemittel durchgeführt werden. Als inerte Lösungsmittel eignen sich z.B. Kohlenwasserstoffe, insbesondere Toluol, Xylol oder Cyclohexan. Dies ist jedoch weniger bevorzugt.
In den erfindungsgemäßen Produkten beträgt das molare Verhältnis der Summe der dosierten Epoxide, inklusive der bereits in der Startphase zugefügten Epoxide, bezogen auf die eingesetzte Startverbindung, dabei vorzugsweise 1 bis 10⁵ zu 1, insbesondere 1 bis 10³ zu 1.

Die Anlagerung der Alkylenoxidverbindungen geschieht vorzugsweise bei einer Temperatur von 60 bis 250 °C, besonders bevorzugt bei einer Temperatur von 90 bis 160 °C insbesondere bei einer Temperatur von 120 bis 150°C.
Der Druck, bei dem die Alkoxylierung stattfindet, beträgt vorzugsweise 0,02 bar bis 100 bar, besonders bevorzugt 0,05 bis 20 bar und insbesondere von 0,2 bis 2 bar absolut. Durch die Durchführung der Alkoxylierung im Wesentlichen bei Unterdruck kann die Reaktion sehr sicher durchgeführt werden. Gegebenenfalls kann die Alkoxylierung in Gegenwart eines Inertgases (z.B. Stickstoff) oder - zur Herstellung von Polyethercarbonaten - in Gegenwart von Kohlendioxid auch bei einem Überdruck von dann vorzugsweise 1 bis 20 bar absolut durchgeführt werden.

Die für die Herstellung von estermodifizierten Polyethern einsetzbaren Lactone oder cyclischen Anhydride können sowohl bereits in der Startphase dem Gemisch aus Eugenol und DMC-Katalysator zugefügt als auch zu einem späteren Zeitpunkt parallel zur Alkylenoxiddosierung zugeführt werden. Die genannten Comonomere können auch jeweils nacheinander alternierend mit Alkylenoxiden in den Reaktor dosiert werden.
Das molare Verhältnis der Alkylenoxidmonomere zu cyclischen Anhydriden ist dabei variabel. Üblicherweise werden mindestens äquimolare Mengen Alkylenoxidmonomere bezogen auf Anhydride eingesetzt. Bevorzugt ist die Verwendung der Alkylenoxide in einem molaren Überschuss, um die vollständige Anhydridumsetzung zu gewährleisten.

Lactone können während der Alkoxylierung wahlweise im stöchiometrischen Unterschuss oder Überschuss bezogen auf die Alkylenoxidmonomere zugefügt werden.

In einer besonderen Ausführungsform des Schritts 1 des erfindungsgemäßen Verfahrens kann es von Vorteil sein, während der laufenden Alkoxylierung weiteren Starter dem Reaktionsgemisch zuzuführen.
So kann die Zudosierung von weiteren Mengen Eugenols einmalig zu einem bestimmten Zeitpunkt oder auch mehrmalig in Portionen zu mehreren Zeitpunkten erfolgen. Die Gesamtmenge an Eugenol kann hierbei gleichmäßig auf die gewünschte Anzahl an Portionen aufgeteilt werden, es ist jedoch auch möglich die Gesamtmenge auf unterschiedlich große Portionen aufzuteilen.
Neben der zuvor beschriebenen diskontinuierlichen Zugabe von Eugenol kann die Zugabe auch kontinuierlich erfolgen. Hierbei kann die kontinuierliche Zugabe einmalig während der Alkoxylierungsreaktion durchgeführt werden oder mehrmalig. Bevorzugt erfolgt die Zugabe von Eugenol kontinuierlich. Insbesondere bevorzugt erfolgt die Zugabe von Eugenol einmalig und dann in kontinuierlicher Art und Weise.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl diskontinuierlich (batchweise) als auch kontinuierlich erfolgen. Beim erfindungsgemäßen Verfahren auf Basis der DMC-Katalyse kann im Normalfall auf eine Filtration verzichtet werden.

Die terminalen Hydroxygruppen der Eugenol-basierten Polyether können frei bleiben oder können teilweise oder komplett modifiziert werden, um die optimale Kompatibilität in der späteren Anwendungsmatrix einstellen zu können.
Als Modifikation sind Umesterungen, Veresterungen oder Veretherungen ebenso denkbar wie weitere Kondensations- oder Additionsreaktionen mit z. B. Isocyanaten.

In einer bevorzugten Ausführungsform kann die Umsetzung mit Silanol-Bildnern oder Monoisocyanaten, bevorzugt mit einem Monoisocyanat durchgeführt werden, wie in der Anmeldung EP 2415797 (US 2012/029090) beschrieben.

Als geeignete Monoisocyanate können im einfachsten Fall Alkyl-, Aryl-, Arylalkylisocyanate eingesetzt werden. Bevorzugt können Methyl-, Ethyl-, Butyl-, Hexyl-, Octyl-, Dodecyl-, Toluyl- und Stearylisocyanat eingesetzt werden, insbesondere bevorzugt ist Butylisocyanat. Es können auch difunktionelle Isocyanate wie MDI, IPDI oder TDI eingesetzt werden, dies ist jedoch weniger bevorzugt.

In einer weiteren bevorzugten Ausführungsform kann die Umsetzung in Form einer Umesterung mit Acetoacetatestern wie z.B. Ethylacetoacetat oder tert-Butylacetoacetat durchgeführt werden. Vorteilhaft bei derartigen Umesterungen sind die milden Reaktionsbedingungen von 90-140°C, die meist schon unkatalysiert zu guten Umsatzgraden führen. Je nach Bedarf können Acetoacetat-Gruppen auch durch die Umsetzung des Polyethers mit Diketen eingeführt werden.

Die terminalen Hydroxygruppen bleiben bevorzugt frei, werden acetyliert, methyliert oder mit Carbonaten oder Acetoacetaten endverkappt. Insbesonders bevorzugt bleiben die terminalen OH-Gruppen frei oder werden acetyliert.

Die chemischen Modifizierungen der freien Hydroxygruppen der Eugenol-basierten Polyether können sowohl vor als auch nach der Hydrosilylierungsreaktion mit dem Si-H-funktionellen Polysiloxan chemisch modifiziert werden.

Die Polydispersität (Mw/Mn) der Eugenol-basierten Polyether der Formel (I), bestimmt mittels GPC, beträgt vorzugsweise < 2,5, bevorzugt <2,0 und besonders bevorzugt von >1,05 bis <1,5.

Die erfindungsgemäßen Eugenol-basierten Polyether der Formel (I) können für vielfältige Anwendungen eingesetzt werden, besonders ist der Einsatz als grenzflächenaktive Substanzen und insbesondere als Dispergiermittel zu nennen.

Schritt 1 des Verfahrens kann prinzipiell selbstständig und ohne den nachfolgenden Verfahrensschritt 2 durchgeführt werden. Die Verfahrensprodukte des Schrittes 1 sind ebenfalls Gegenstand der vorliegenden Erfindung. Bevorzugt werden die Verfahrensprodukte des Schrittes 1 jedoch im Schritt 2 weiter umgesetzt.

### Schritt 2:

Der Schritt 2 des erfindungsgemäßen Verfahrens wird vorzugsweise als Hydrosilylierung durchgeführt. Dabei werden die terminal ungesättigten Eugenol-basierten Polyether aus Schritt 1 mit SiH-funktionellen Siloxanen mittels Edelmetallkatalyse SiC-verknüpft.
Vorzugsweise erfolgt die Bereitstellung der SiH-funktionellen Siloxane für den Verfahrensschritt 2 durch die Durchführung des aus dem Stand der Technik bekannten Verfahrens der Äquilibrierung, bevorzugt an sulfonsaurem Harz. Die Äquilibrierung der verzweigten oder linearen, ggf. hydrosilylierten, Poly(organo)siloxane mit end- und/oder seitenständigen SiH-Funktionen wird im Stand der Technik, z. B. in den Schriften EP 1 439 200 A1, DE 10 2007 055 485 A1 und DE 10 2008 041 601 beschrieben. Diese Schriften werden hiermit als Referenz eingeführt und gelten als Teil der Offenbarung der vorliegenden Erfindung.

Die Herstellung der bevorzugt eingesetzten Silikonpolyetherblock-Copolymeren kann nach einem aus dem Stand der Technik bekanntem Verfahren erfolgen, bei dem verzweigte oder lineare Polyorganosiloxane mit endständigen und/oder seitenständigen SiH-Funktionen, mit einem ungesättigten Polyether oder einem Polyethergemisch aus mindestens zwei ungesättigten Polyethern umgesetzt werden. Die Umsetzung wird vorzugsweise als edelmetallkatalysierte Hydrosilylierung, wie z. B. in EP 1 520 870 beschrieben, durchgeführt. Die Schrift EP 1 520 870 wird hiermit als Referenz eingeführt und gilt als Teil des Offenbarungsgehaltes bezüglich des Schrittes 2 des erfindungsgemäßen Verfahrens der vorliegenden Erfindung. Als Edelmetallkatalysator wird vorzugsweise ein Platin aufweisender Katalysator eingesetzt.

Die Umsetzung gemäß Schritt 2 kann in Anwesenheit oder Abwesenheit von gesättigten Polyethern durchgeführt werden. Vorzugsweise wird der Verfahrensschritt 2 in Gegenwart von gesättigten Polyethern durchgeführt. Es ist möglich, den Verfahrensschritt 2 in Gegenwart weiterer von gesättigten Polyethern verschiedenen Lösungsmitteln durchzuführen. Vorzugsweise werden keine von gesättigten Polyethern verschiedenen Lösungsmittel eingesetzt. Der Verfahrensschritt 2 kann auch in Gegenwart von Säure puffernden Agenzien durchgeführt werden. Vorzugsweise wird er aber in Abwesenheit von Säure puffernden Agenzien durchgeführt. Bevorzugt wird der Verfahrensschritt in Abwesenheit von Säure puffernden Agenzien und Lösungsmitteln, die von gesättigten Polyethern verschieden sind, durchgeführt, insbesondere bervorzugt werden ausschließlich Eugenol-basierte Polyether in Schritt 2 umgesetzt.

In Schritt 2 können neben den terminal ungesättigten Eugenol-basierten Polyethern aus Schritt 1 weitere von diesen verschiedene lineare und/oder verzweigte, ungesättigte Polyetherverbindungen ebenso eingesetzt werden wie auch weitere terminal ungesättigte organische Verbindungen. Dies kann insbesondere vorteilhaft sein, um die Verträglichkeit der Eugenol-Polyether enthaltenden Polysiloxane mit der jeweiligen Anwendungsmatrix anpassen zu können.

Bei derartigen Polyethern handelt es sich vorteilhaft um Allylpolyether, die nach beliebigen Verfahren, die dem Stand der Technik zu entnehmen sind, hergestellt werden können.

Bei derartigen terminal ungesättigten organischen Verbindungen handelt es sich bevorzugt um Alken- oder Alkin-Verbindungen, die noch weitere Substituenten tragen können. Es können zum Beispiel Allylglycidether, Glycerinmonoallylether, Allylanisol, Allylphenol, Eugenol, Hexenol, Hexadecen sowie Undecylensäure-methylester eingesetzt werden, insbesondere bevorzugt Hexadecen, Eugenol und Glycerinmonoallylether.

Es können ausschließlich Eugenol-basierte Polyether oder aber beliebige Mischungen dieser Eugenol-basierten Polyether mit terminal ungesättigten Verbindungen eingesetzt werden. Der molare Anteil der eingesetzten ungesättigten Eugenol-basierten Polyether zu den ungesättigten Verbindungen beträgt vorzugsweise von 0,001 bis 100 mol-%, bevorzugt von 10 bis 100 mol-% und besonders bevorzugt 20 bis 80-mol-% bezogen auf die Summe aus Eugenol-basierten Polyether und ungesättigten Verbindungen.

Mittels des erfindungsgemäßen Verfahrens können z. B. die nachfolgend beschriebenen Polysiloxanverbindungen hergestellt werden.

Die erfindungsgemäßen Polysiloxanverbindungen der Formel (II)

Mg M'ₕ Dᵢ D'ⱼ D"ₘ Tₖ Qₗ Formel (II)

zeichnen sich dadurch aus, dass
M = [R¹⁵₃SiO_{1/2}]
M' = [R¹⁶R¹⁵₂SiO_{1/2}]
D = [R¹⁵₂SiO_{2/2}]
D' = [R¹⁶R¹⁵SiO_{2/2}]
D" = [R¹⁷R¹⁵SiO_{2/2}]
T = [R¹⁵SiO_{3/2}]
Q = [SiO_{4/2}]
g = 0 - 20, bevorzugt 0 - 10, insbesondere bevorzugt 2,
h = 0 - 20, bevorzugt 0 - 10, insbesondere bevorzugt 0,
i = 0 - 1000, bevorzugt 0 - 500, insbesondere bevorzugt 0 - 200,
j = 0 - 20, bevorzugt 1 - 15, insbesondere bevorzugt 1 - 10,
k = 0 - 20, bevorzugt 0 - 10, insbesondere bevorzugt 0,
l = 0 - 20, bevorzugt 0 - 10, insbesondere bevorzugt 0,
m = 0 - 20, bevorzugt 1 - 15, insbesondere bevorzugt 1 - 10,
mit der Maßgabe, dass die Summe aus g + h + i + j + k + l + m größer gleich 3, sowie die Summe aus h + j ≥ 1 sein muss
und
- R¹⁵=: unabhängig voneinander gleiche oder verschiedene Kohlenwasserstoffreste mit 1 - 16 Kohlenstoffatomen oder H, bevorzugt Methyl, Ethyl oder Phenyl, insbesondere bevorzugt Methyl,
- R¹⁶=: unabhängig voneinander gleiche oder verschiedene Polyetherreste, mit der Maßgabe, dass mindestens 10 % der Reste Eugenol-basierten Polyetherreste sind, entsprechen die Eugenol- basierten Polyetherreste der allgemeinen Formel (III) 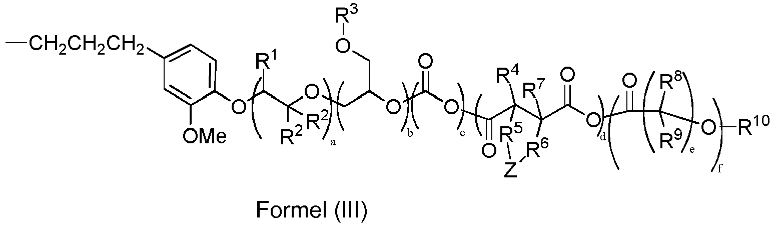
und nicht Eugenol- basierte Polyether entsprechen Resten der allgemeinen Formel (IV), 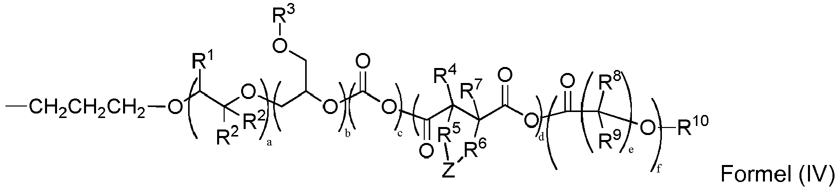 mit den Indices a-f und den Resten R¹-R¹⁰ wie zuvor definiert.
- R¹⁷=: unabhängig voneinander gleiche oder verschiedene Kohlenwasser-stoffreste mit 1 - 16 Kohlenstoffatomen die auch Heteroatome enthalten und weiter substituiert sein können, bevorzugt handelt es sich um SiC-verknüpfte Reste resultierend aus Allylglycidether, Glycerinmonoallylether, Allylanisol, Eugenol, Hexenol, Hexadecen und Undecylensäuremethylester, insbesondere bevorzugt Hexadecen, Eugenol und Glycerinmonoallylether.

Verbindungen der allgemeinen Formel (II), die neben Eugenol-basierten Polyethern der Formel (III) auch weitere nicht Eugenol-basierte Polyether der Formel (IV) enthalten, werden vorteilhaft in solchen Systemen eingesetzt, die einer Verträglichkeitsanpassung bedürfen, enthält das Polyethersiloxan ausschließlich Eugenol-basierte Polyetherstrukturen, kann eine nötige Anpassung der Verträglichkeit auch durch den intrinsischen Aufbau des Eugenol-basierten Polyether erreicht werden.

Die erfindungsgemäßen Polysiloxanverbindungen sind vorzugsweise erhältlich durch das oben beschriebene erfindungsgemäße Verfahren.

Die erfindungsgemäßen Polysiloxanverbindungen der Formel (II) und die erfindungsgemäßen Zusammensetzungen können für vielfältige Anwendungen eingesetzt werden, insbesondere ist der Einsatz als grenzflächenaktive Substanzen zu nennen.
Ein weiterer Gegenstand der vorliegenden Erfindung ist daher die Verwendung von Produkten der Formel (I) als grenzflächenaktive Substanz. Ebenso Gegenstand der vorliegenden Erfindung ist die Verwendung von Produkten der Formel (I) als Dispergieradditiv.

Ein weiterer Gegenstand der vorliegenden Erfindung ist zudem die Verwendung von Produkten der Formel (II) als grenzflächenaktive Substanz. Ebenso Gegenstand der vorliegenden Erfindung ist die Verwendung von Produkten der Formel (II) als Dispergieradditiv.

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

MALDI-Tof-Analysen wurden mit einem Shimadzu Biotech Axima (CFR 2.8.420081127) Gerät im Mode "Reflectron" durchgeführt. Die "Pulse Extraction" war optimiert auf ein Molgewicht von 1 000 g/mol. Die Probe wurde in Chloroform (4-5 g/L) gelöst und 2 µL dieser Lösung auf Graphit als Matrix aufgetragen.

Gewichtsmittlere und zahlenmittlere Molekulargewichte werden im Rahmen dieser Erfindung für die hergestellten Eugenol-basierten Polyether kalibriert gegen einen Polypropylenglykolstandard sowie die Eugenol-Polyether enthaltenden Polysiloxane kalibriert gegen einen Polystyrolstandard durch Gelpermeationschromatographie (GPC) bestimmt. Die GPC wurde durchgeführt auf einem Agilent 1100 ausgestattet mit einem RI-Detektor und einer SDV 1000/10000 Å Säulenkombination bestehend aus einer 0,8 cm x 5 cm Vorsäule und zwei 0,8 cm x 30 cm Hauptsäulen bei einer Temperatur von 30°C und einer Fließrate von 1 mL/min (mobile Phase: THF). Die Probenkonzentration betrug 10 g/L und das Injektionsvolumen 20 µL.

Die nasschemische Analytik wurde in Anlehnung an internationale Standardmethoden durchgeführt: lodzahl (IZ; DGF C-V 11 a (53); Säurezahl (SZ; DGF C-V 2); OH-Zahl (ASTM D 4274 C).

Der Polydispersitätsindex (PDI) ist der Quotient aus Mw durch Mn (PDI = Mw/Mn).

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiel 1: Synthese eines Eugenol-basierten Polyethers (erfindungsgemäß):

In einem 5 Liter Autoklaven wurden 351 g Eugenol vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 100 °C erhitzt und auf ca. 20 mbar evakuiert, um leichtflüchtige Komponenten zu entfernen. Nach 30 min wurde die Temperatur auf 130°C erhöht und zur Aktivierung des Katalysators 100 g Propylenoxid in den evakuierten Reaktor dosiert. Der Innendruck stieg zunächst auf ca. 0,8 bar an. Der Druck begann langsam zu sinken und war nach ca. 7 min auf -0,1 bar gesunken. Nun wurden weitere 50 g PO zudosiert woraufhin der Druck erneut auf 0,8 bar stieg. Nach 12 Minuten war der Druck auf - 0,1 bar gefallen und es wurden erneut 50 g PO zudosiert. Nachdem der Druck auf 0 bar gefallen war wurde begonnen PO langsam kontinuierlich zuzudosieren. Nachdem insgesamt 210 g PO zudosiert waren viel der Druck schlagartig auf -0,9 bar ab, was als Zeichen gewertet wurde, dass die Reaktion nun richtig angesprungen war. Nun wurden innerhalb von ca. 10 Minuten kontinuierlich 38 g Propylenoxid zudosiert. Es schloß sich eine einstündige Nachreaktion an. Dann wurde kontinuierlich ein Gemisch aus 1110 g EO und 1290 g PO so zudosiert, dass die Temperatur konstant blieb. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 40,2 mg KOH/g aufwies sowie eine SZ von 0,1 mg KOH/g. Das Molgewicht laut OH-Zahl betrug 1395 g/mol. Laut GPC betrug M_{w} = 1394 g/mol, Mₙ = 1316 g/mol und der PDI betrug 1,06.

### Beispiel 2: Synthese eines Eugenol-basierten Polyethers (erfindungsgemäß):

In einem 5 Liter Autoklaven wurden 164,2 g Eugenol vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 100 °C erhitzt und auf ca. 20 mbar evakuiert, um leichtflüchtige Komponenten zu entfernen. Nach 30 min wurde die Temperatur auf 130°C erhöht und zur Aktivierung des Katalysators 70 g Propylenoxid in den evakuierten Reaktor dosiert. Der Innendruck stieg zunächst auf ca. 0,8 bar an. Der Druck begann langsam zu sinken und war nach ca. 30 min auf -0,4 bar gesunken. Nun wurden mit einer langsamen kontinuierlichen Zugabe von Propylenoxid begonnen. Nach der Zugabe weiterer 56 g PO stieg der Druck auf 0,7 bar an und fiel schließlich nach der Zugabe von 200 g PO-Gesamtmenge schlagartig auf -0,8 bar ab, was als Zeichen gewertet wurde, dass die Reaktion nun richtig angesprungen war. Nun wurden kontinuierlich 1673 g Propylenoxid so zudosiert, dass die Temperatur konstant blieb. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 26,8 mg KOH/g aufwies sowie eine SZ von 0,1 mg KOH/g. Das Molgewicht laut OH-Zahl betrug 2093 g/mol. Laut GPC betrug M_{w} = 1957 g/mol, Mₙ = 1830 g/mol und der PDI betrug 1,07.

### Beispiel 3: Synthese eines Eugenol-basierten Polyethers (erfindungsgemäß):

In einem 5 Liter Autoklaven wurden 544 g Eugenol vorgelegt und mit 200 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 80 °C erhitzt und auf ca. 20 mbar evakuiert, um leichtflüchtige Komponenten zu entfernen. Nach 30 min wurde die Temperatur auf 140°C erhöht und zur Aktivierung des Katalysators 80 g Propylenoxid in den evakuierten Reaktor dosiert. Der Innendruck stieg zunächst auf ca. 0,6 bar an. Der Druck begann langsam zu sinken und war nach ca. 10 min auf -0,2 bar gesunken. Nun wurden weitere 74 g PO zudosiert woraufhin der Druck langsam innerhalb von 60 Minuten auf -0,8 bar abfiel. Nun wurde begonnen ein Gemisch aus 612 g Ethylenoxid und 691 g Propylenoxid zuzudosieren. Innerhalb von 30 Minuten wurden 110 g des EO/PO-Gemisches zudosiert, woraufhin der Druck im Reaktor auf 0,5 bar stieg. Dann wurden in 15 Minuten weitere 54 g des Gemisches zugesetzt. Der Druck stieg bis zu 1,5 bar an und fiel dann schlagartig auf -0,5 bar ab, was als Zeichen gewertet wurde, dass die Reaktion nun richtig angesprungen war. Nun wurden innerhalb von 40 Minuten kontinuierlich die restlichen Mengen des Alkylenoxidgemisches (1139 g) zudosiert. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 81,8 mg KOH/g aufwies sowie eine SZ von 0,1 mg KOH/g. Das Molgewicht laut OH-Zahl betrug 685 g/mol. Laut GPC betrug M_{w} = 640 g/mol, Mₙ = 583 g/mol und der PDI betrug 1,10.

### Beispiel 4: Synthese eines Eugenol-basierten Polyethers (erfindungsgemäß):

In einem 5 Liter Autoklaven wurden 503 g Eugenol vorgelegt und mit 100 ppm (bezogen auf den Gesamtansatz) eines Zinkhexacyanocobaltat-Doppelmetallcyanid-Katalysators versetzt. Zum Inertisieren wurde der Reaktor bis 3 bar mit Stickstoff beaufschlagt und anschließend auf Normaldruck entspannt. Der Vorgang wurde noch zweimal wiederholt. Unter Rühren wurde der Reaktorinhalt auf 120 °C erhitzt und auf ca. 20 mbar evakuiert, um leichtflüchtige Komponenten zu entfernen. Nach 30 min wurde die Temperatur auf 130°C erhöht und zur Aktivierung des Katalysators 70 g Propylenoxid in den evakuierten Reaktor dosiert. Der Innendruck stieg zunächst auf ca. 0,5 bar an. Der Druck begann langsam zu sinken und war nach ca. 20 min auf -0,9 bar gesunken. Nun wurden langsam, in einem Zeitraum von 40 Minuten 196 g PO zudosiert woraufhin der Druck auf 0,5 bar anstieg. Nach einer dreißig minütigen Nachreaktion sank der Druck auf -0,4 bar und es wurde begonnen ein Gemisch aus 1078 g EO und 1154 g PO zuzudosieren.

Innerhalb von 30 Minuten wurden 60 g des EO/PO-Gemisches zudosiert, woraufhin der Druck im Reaktor zunächst in den leichten Überdruck stieg und dann schlagartig auf -0,9 bar abfiel, was als Zeichen gewertet wurde, dass die Reaktion nun richtig angesprungen war. Nun wurden innerhalb von 75 Minuten kontinuierlich die restlichen Mengen des Alkylenoxidgemisches (2172 g) zudosiert. Nach einer halbstündigen Nachreaktion wurde durch Anlegen eines Drucks (P < 20 mbar) desodoriert, um Reste an nicht umgesetztem Alkylenoxid zu entfernen. Anschließend wurden 500 ppm ANOX 20 AM für 15 Minuten eingerührt. Es wurde ein farbloses bis gelbliches Produkt erhalten, dass eine OH-Zahl von 51,6 mg KOH/g aufwies sowie eine SZ von 0,1 mg KOH/g. Das Molgewicht laut OH-Zahl betrug 1087 g/mol. Laut GPC betrug M_{w} = 1012 g/mol, Mₙ = 945 g/mol und der PDI betrug 1,07.

### Beispiel 5: Acetylierung eines Eugenol-basierten Polyethers aus Beispiel 1 (erfindungsgemäß)

Unter Schutzgas wurde in einem 2 Liter Dreihals-Kolben ausgestattet mit Tropftrichter und Rückflußkühler der Eugenol-basierte Polyether aus Beispiel 1 zusammen mit katalytischen Mengen an konz. Salzsäure vorgelegt und erwärmt. Dann wurde langsam Essigsäureanhydrid zugegeben. Nach kompletter Addition wurde das Gemisch noch 4 h gerührt. Dann wurden gegebenenfalls vorhandene Säurereste abdestilliert und es wurde ein farbloses bis gelbliches Produkt erhalten, dass eine OH-Zahl von 0,1 mg KOH/g aufwies sowie eine SZ von 0,1 mg KOH/g. Die OH-Zahl deutet im Rahmen der Meßungenauigkeiten der Analytik auf eine quantitative Acetylierung der terminalen OH-Gruppen des Polyethers hin. Das GPC im Vergleich zum Polyether aus Beispiel 1 blieb im Rahmen der Meßungenauigkeiten zweier unabhängiger Messungen gleich. Laut GPC betrug M_{w} = 1424 g/mol, Mₙ = 1316 g/mol und der PDI betrug 1,08.

### Beispiel 6: Synthese eines 2-Naphtol-basierten Polyethers (Vergleichsbeispiel):

Die Reaktion wurde analog Beispiel zwei durchgeführt. Es wurden 144,1 g 2-Naphthol gemeinsam mit 200 ppm (bezogen auf den Gesamtansatz) eines Zinkhexacyanocobaltat-Doppelmetallcyanid-Katalysators vorgelegt und 1856 g PO angelagert. Bis zum Anspringen der Reaktion waren die portionsweise Zugabe von 215 g PO nötig. Der Druck stieg hierbei maximal auf 2 bar und fiel nach Zugabe der letzten Portion PO innerhalb von 12 Minuten auf -0,9 bar ab. Die Restmenge Propylenoxid konnte innerhalb von 75 Minuten zudosiert werden. Es wurde ein farbloses bis gelbliches Produkt erhalten, dass eine OH-Zahl von 31,8 mg KOH/g aufwies sowie eine SZ von 0,2 mg KOH/g. Das Molgewicht laut OH-Zahl betrug 1764 g/mol. Laut GPC betrug M_{w} = 1945 g/mol, Mₙ = 1730 g/mol und der PDI betrug 1,12.

### Beispiel 7: Synthese eines Guajakol-basierten Polyethers (Vergleichsbeispiel):

Die Reaktion wurde analog Beispiel zwei durchgeführt. Es wurden 125 g Guajakol gemeinsam mit 100 ppm (bezogen auf den Gesamtansatz) eines Zinkhexacyanocobaltat-Doppelmetallcyanid-Katalysators vorgelegt und 1894 g PO angelagert. Es wurde ein farbloses bis gelbliches Produkt erhalten, dass eine OH-Zahl von 31,7 mg KOH/g aufwies sowie eine SZ von 0,1 mg KOH/g. Das Molgewicht laut OH-Zahl betrug 1769 g/mol. Laut GPC betrug M_{w} = 1936 g/mol, Mₙ = 1667 g/mol und der PDI betrug 1,16.

**Tabelle 1: Zusammenfassung der analytischen Daten der Beispiele 2, 6 und 7**

| Produkt | GPC | | | | | |
|---|---|---|---|---|---|---|
| | Mw [g/mol] | Mn [g/mol] | PDI | I* [%] | M (theo)** [g/mol] | M*** [g/mol] |
| Beispiel 2 (erfindungsgemäß) | 1957 | 1830 | 1,08 | 8 | 2038 | 2093 |
| Beispiel 6 (Vergleich) | 1945 | 1730 | 1,12 | 30 | 2000 | 1764 |
| Beispiel 7 (Vergleich) | 1936 | 1667 | 1,16 | 18 | 2000 | 1769 |

| | | | | | | |
|---|---|---|---|---|---|---|
| * Anteil hochmolekularer Verbindung bestimmt durch Integration des Signals im GPCs; **Theoretisches Molekulargewicht gemäß Einwaagen; ***Molekulargewicht resultierend aus der bestimmten OH-Zahl. | | | | | | |

### Beispiel 8: Herstellung eines Polyethersiloxans mit Eugenol-basiertem Polyether (erfindungsgemäß)

In einem 500 mL-Dreihalskolben mit Thermometer, Rückflußkühler und KPG-Rüher wurden 79,0 g eines SiH-funktionellen Siloxanes der allgemeinen Formel [Me₂SiHO_{1/2}]₂ [Me₂SiO_{2/2}]₃₇[MeSiHO_{2/2}]₃ mit 171 g des Eugenol- basierten Polyethers aus Beispiel 4 versetzt. Die Mischung wurde gerührt und auf 90 °C erhitzt. Anschließend wurde das Reaktionsgemisch mit 0,17 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 9: Herstellung eines Polyethersiloxans mit Eugenol-basiertem Polyether (erfindungsgemäß)

In einem 500 mL-Dreihalskolben mit Thermometer, Rückflußkühler und KPG-Rüher wurden 44,3 g eines SiH-funktionellen Siloxanes der allgemeinen Formel [Me₃SiO_{1/2}]₂ [Me₂SiO_{2/2}]₁₃[MeSiHO_{2/2}]₅ mit 205,7 g des Eugenol- basierten Polyethers aus Beispiel 4 versetzt. Die Mischung wurde gerührt und auf 90 °C erhitzt. Anschließend wurde das Reaktionsgemisch mit 0,17 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 10: Herstellung eines Polyethersiloxans mit Eugenol-basiertem und nicht-Eugenol basiertem Polyether (erfindungsgemäß)

In einem 500 mL-Dreihalskolben mit Thermometer, Rückflußkühler und KPG-Rüher wurden 40,0 g eines SiH-funktionellen Siloxanes der allgemeinen Formel [Me₃SiO_{1/2}]₂ [Me₂SiO_{2/2}]₁₃[MeSiHO_{2/2}]₅ mit 94,8 g des Eugenol- basierten Polyethers aus Beispiel 4 sowie 132,7 g eines Polyethers der allgemeinen Formel CH₂=CHCH₂O-(CH₂CH₂O)₁₃(CH₂CH(CH₃)O)₁₃Me versetzt. Die Mischung wurde gerührt und auf 90 °C erhitzt. Anschließend wurde das Reaktionsgemisch mit 0,18 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 11: Herstellung eines Polyethersiloxans mit Eugenol-basiertem Polyether (erfindungsgemäß)

In einem 500 mL-Dreihalskolben mit Thermometer, Rückflußkühler und KPG-Rüher wurden 112,0 g eines SiH-funktionellen Siloxanes der allgemeinen Formel [Me₂SiHO_{1/2}]₂ [Me₂SiO_{2/2}]₂₈ mit 138,0 g des Eugenol- basierten Polyethers aus Beispiel 4 versetzt. Die Mischung wurde gerührt und auf 90 °C erhitzt. Anschließend wurde das Reaktionsgemisch mit 0,17 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche klare, einphasige Flüssigkeit.

### Beispiel 12: Herstellung eines Polyethersiloxans mit Eugenol-basiertem Polyether (erfindungsgemäß)

In einem 500 mL-Dreihalskolben mit Thermometer, Rückflußkühler und KPG-Rüher wurden 32,0 g eines SiH-funktionellen Siloxanes der allgemeinen Formel [Me₃SiO_{1/2}]₂ [MeSiHO_{2/2}]₁ mit 218,0 g des Eugenol- basierten Polyethers aus Beispiel 4 versetzt. Die Mischung wurde gerührt und auf 90 °C erhitzt. Anschließend wurde das Reaktionsgemisch mit 0,2 g einer Lösung des Karstedt-Katalysators (CAS Nummer: 68478-92-2) in Xylol (1,5 % Pt) versetzt. Es wurde eine exotherme Reaktion beobachtet. Die Mischung wurde fünf Stunden lang gerührt. Man erhielt eine gelbliche klare, einphasige Flüssigkeit.

### Beispiel 13: Herstellung eines Polyethersiloxans mit Eugenol-basiertem und nicht-Eugenol basiertem Polyether (erfindungsgemäß)

In einem 500 mL-Dreihalskolben mit Thermometer, Rückflußkühler und KPG-Rüher wurden 150 g eines SiH-funktionellen Siloxanes der allgemeinen Formel [Me₃SiO_{1/2}]₂ [Me₂SiO_{2/2}]₁₁₃[MeSiHO_{2/2}]₅ mit 45,9 g des Eugenol- basierten Polyethers aus Beispiel 4 sowie 55,1 g eines Polyethers der allgemeinen Formel CH₂=CHCH₂O-(CH₂CH₂O)₁₃(CH₂CH(CH₃)O)₂H versetzt. Die Mischung wurde gerührt und auf 90 °C erhitzt. Anschließend wurde das Reaktionsgemisch mit 0,15 g einer Lösung des Karstedt-Katalysators (CAS Nummer: 68478-92-2) in Xylol (1,5 % Pt) versetzt. Es wurde eine exotherme Reaktion beobachtet. Die Mischung wurde zwei Stunden lang gerührt. Man erhielt eine gelbliche, leicht trübe Flüssigkeit.

### Beispiel 14: Herstellung eines Polyethersiloxans mit Eugenol-basiertem Polyether und Dodecen (erfindungsgemäß)

In einen 1-L-Dreihals-Kolben wurden 164 g eines SiH-funktionellen Siloxans der allgemeinen Formel Me₃SiO[SiMe₂O]₇₀[SiHMeO]₂₀SiMe₃ vorgelegt. Es wurde auf 80 °C geheizt und 6 mg Pt in Form des Karstedt-Katalysators zugesetzt. Anschließend wurden 44 g 1-Dodecen langsam zugetropft. Danach wurden 424 g des Polyethers aus Beispiel 4 langsam zudosiert. Das Reaktionsgemisch wurde 2 h bei 80 °C weiter gerührt. Es wurde ein klares homogenes Alkyl- und Polyether-modifiziertes Siloxan erhalten.

### Beispiel 15a: Herstellung eines Polyethersiloxans mit Eugenol-basiertem Polyether (erfindungsgemäß)

In einen 250 mL Dreihalskolben mit KPG-Rührer und Rückflußkühler wurden 80 g einenes Siloxans mit der allgemeinen Formel Me₃SiO[SiMe₂O]_{61,5}[SiMeH]_{6,5}SiMe₃ und 112 g eines Polyethers der allgemeinen Formel 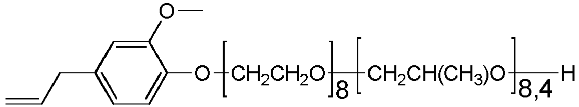 vorgelegt. Der Überschuss an Doppelbindungen in Bezug auf SiH-Funktionen betrug 12 %. Die Mischung wurde intensiv gerührt und auf 80 °C geheizt. Es wurden 8 ppm Pt in Form des Karstedt-Katalysators zugesetzt. Das Reaktionsgemsich wurde 4 Stunden bei 80 °C gerührt. Man erhielt ein klares Produkt. Der SiH-Umsatz betrug 97 %.

### Beispiel 15b: Herstellung eines Polyethersiloxans mit Allyl-basiertem Polyether (nicht erfindungsgemäß)

In einen 250 mL Dreihalskolben mit KPG-Rührer und Rückflußkühler wurden 80 g einenes Siloxans mit der allgemeinen Formel Me₃SiO[SiMe₂O]_{61,5}[SiMeH]_{6,5}SiMe₃ und 100 g eines Polyethers der allgemeinen Formel 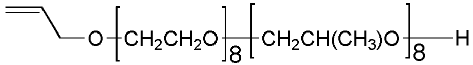 vorgelegt. Der Überschuss an Doppelbindungen in Bezug auf SiH-Funktionen betrug 12 %. Die Mischung wurde intensiv gerührt und auf 80 °C geheizt. Es wurden 8 ppm Pt in Form des Karstedt-Katalysators zugesetzt. Das Reaktionsgemsich wurde 4 Stunden bei 80 °C gerührt. Man erhielt ein klares Produkt. Der SiH-Umsatz betrug lediglich 89 %. Auch nach weiteren 2 Stunden Reaktionszeit wurde kein höherer SiH-Umsatz festgestellt.

Der Vergleich der Beispiele 15a und 15b zeigt, dass es mit Hilfe der erfindungsgemäßen Polyether möglich ist einen geringeren Überschuss an Polyether einzusetzen, um hohe SiH-Umsätze zu erzielen. Dies bedeutet, dass weniger freier Polyether im Produkt verbleibt. Das Erzielen höherer Umsätze ist ein weiterer wichtiger Vorteil gegenüber gängigen Polyethersiloxanen.

### Beispiel 16: Anwendungstechnische Evaluierung

### a.) Rezeptur zur Herstellung einer Pigmentpräparation (Pigmentpaste) mit einem erfindungsgemäßen Polyether:

| **Rohstoffe** | **1** | **2** |
|---|---|---|
| VE-Wasser | 49 | 49 |
| Tego Foamex 830^{a)} | 1 | 1 |
| Polyether aus Beispiel 1 (erfindungsgemäß) | 10 | |
| Polyether eingesetzt in Beispiel 15b (Vergleich) | | 10 |
| Heliogenblau L7101f | 40 | 40 |
| Total | 100 | 100 |

| | | |
|---|---|---|
| ^{a)} Entschäumer, Fa. Evonik Industries AG | | |

### b.) Herstellung und Testmethode:

Die Rohstoffe wurden nacheinander in ein 250 mL Weithalsglas gewogen und homogenisiert. Anschließend wurden 200 g Glasperlen mit einem Durchmesser von 2,5-2,8 mm hinzu gewogen. Die Dispergierung wurde für 2 Stunden im Disperser DAS H[/A] 200K durchgeführt (Lüftungsstufe 1). Die noch warmen Proben wurden durch ein 400 µm Schnellsieb filtriert und anschließend für 24 h ruhen gelassen.

Zur Bestimmung der koloristischen Eigenschaften wurde ein Stammlack auf Basis von Neocryl XK 90 hergestellt.

**Tabelle 2: Holzlack auf Acrylat Basis:**

| *Mahlgut* | | | |
|---|---|---|---|
| 1 | Tego Dispers 755 W^{a)} | | 7,8 |
| 2 | H₂O, demin. | | 17,9 |
| 3 | Tego Foamex 830^{b)} | | 0,9 |
| 4 | Parmetol K 40^{c)} | | 0,1 |
| 5 | Aerosil 200^{d)} | | 0,3 |
| 6 | Kronos 2310^{e)} | | 63,0 |

| *Let Down* | | | |
|---|---|---|---|
| 7 | Neocryl XK 90^{f)} | | 103,8 |
| 8 | Texanol | | 3,2 |
| 9 | Tego Wet KL 245^{g)} | | 1,0 |
| 10 | Visko Plus 3000^{h)} | | 2,0 |

| *Dispergierung 10 min* | | | |
|---|---|---|---|
| | *Gesamt* | | *200,0* |

| | | | |
|---|---|---|---|
| ^{a)} Dispergiermittel, Fa. Evonik Industries AG ^{b)} Entschäumer, Fa. Evonik Industries AG ^{c)} Konservierungsmittel Fa. Schülke & Mayr ^{d)} Tixotropiermittel, Fa. Evonik Industries AG ^{e)} Weißpigment (Titandioxid), Fa. Kronos ^{f)} Polyacrylatdispersion, Fa. DSM ^{g)} Substratnetzmittel, Fa. Evonik Industries AG ^{h)} Rheologieadditiv, Fa. Evonik Industries AG | | | |

Gemäß Tabelle 2 wurden die Positionen 1 - 6 in eine 250 mL Glasflasche gewogen. 100 g Glasperlen mit einem Durchmesser von 2,5 - 2,8 mm wurden hinzu gewogen und die Dispergierung für eine Stunde in einem Disperser DAS H[/A] 200K bei Lüftungsstufe 1 durchgeführt. Anschließend wurden die Positionen 7 - 10 hinzugefügt und die Mischung noch einmal für 10 Minuten dispergiert. Der Lack wurde durch ein 400 µm Schnellsieb filtriert und vor Verwendung 24 h bei Raumtemperatur stehen gelassen.

### Tönung des Weißlacks:

Es wurden 10 g Lack und jeweils 0,2 g Paste in kleine Kosmetikbecher der Firma Dürrmann mit einem Volumen von 60 mL gewogen. Die Mischung wurde in einem Speedmixer Typ DAC 150 FVZ für 1 Minute bei 3000 upm homogenisiert. Anschließend wurde der eingefärbte Lack mit einem 100 µm Spiralrakel auf eine Leneta Kontrastkarte Form 2DX appliziert. Nach drei Minuten Antrocknungszeit wurde ein Rub out durchgeführt. Nach 24 Stunden Durchtrocknungszeit wurden die L*a*b* Werte mittels Kugel-Farbspektrometer der Firma X-Rite Model SP 62 mit der Einstellung "specular gloss included" vermessen. Der Delta E Wert von nicht geriebener zu geriebener Fläche und die Farbstärke wurden berechnet. Die farbmetrischen Werte sind als Bestandteile des CIE L*a*b* - Farbmodells wiedergegeben (DIN 6174: "Farbmetrische Bestimmung von Farbmaßzahlen und Farbabständen im angenähert gleichförmigen CIELAB-Farbenraum").

Gesucht werden dünnflüssige Pigmentzubereitungen, die in Kombination mit einer Weißbase eine hohe Farbstärke und einen geringen Delta E Wert aufweisen, wie durch den erfindungsgemäßen Polyether aus Beispiel 1 gezeigt.

### c.) Ergebnisse

| | **Paste** | | **Koloristik** | | | | |
|---|---|---|---|---|---|---|---|
| **Probe** | **Viskosität** | **Aussehen** | **L*** | **a*** | **b*** | **ΔE** | **F** |
| Polyether aus Beispiel 1 (erfindungsgemäß) | dünnflüssig | homogen, Schaumfrei | 68,06 | -21,99 | -32,60 | 0,68 | 50,42 |
| Polyether eingesetzt in Beispiel 15b (Vergleich) | hochviskos, pastenartig | inhomogen, Pigmentflokkulate | 86,86 | -10,82 | -11,20 | 27,37 | 6,57 |

## Patentansprüche

1. Verfahren zur Herstellung von Alkoxylierungsprodukten wobei mindestens ein Epoxid in Gegenwart von mindestens einem Übergangsmetall-Katalysator mit Eugenol umgesetzt wird.

2. Verfahren nach Anspruch 1 **dadurch gekennzeichnet, dass** mindestens ein Übergangsmetall-Katalysator ein Doppelmetallcyanid-Katalysator ist.

3. Verfahren nach einem der Ansprüche 1 oder 2 wobei mindestens ein Epoxid ausgewählt ist aus Ethylenoxid, Propylenoxid, Isobutylenoxid, Epichlorhydrin, 2,3-Epoxy-1-propanol, Butylenoxid, 2,3-Epoxybutan, 2,3-Dimethyl-2,3-epoxybutan, 1,2-Epoxypentan, 1,2-Epoxy-3-methylpentan, 1,2-Epoxyhexan, 1,2-Epoxycyclohexan, 1,2-Epoxyheptan, 1,2-Epoxyoctan, 1,2-Epoxynonan, 1,2-Epoxydecan, 1,2-Epoxyundecan, 1,2-Epoxydodecan, Styroloxid, 1,2-Epoxycyclopentan, 1,2-Epoxycyclohexan, Vinylcyclohexenoxid, (2,3-Epoxypropyl)benzol, Vinyloxiran, 3-Phenoxy-1,2-epoxypropan, 2,3-Epoxymethylether, 2,3-Epoxyethylether, 2,3-Epoxylisopropylether, (3,4-Epoxybutyl)stearat, 4,5-Epoxypentylacetat, 2,3-Epoxylpropanmethacrylat, 2,3-Epoxylpropanacrylat, Gylcidylbutyrat, Methylglycidat, Ethyl-2,3-epoxybutanoat, 4-(Trimethylsilyl)butan-1,2-epoxid, 4-(Triethylsilyl)butan-1,2-epoxid, 3-(Perfluoromethyl)-1,2-epoxypropan, 3-(Perfluoroethyl)-1,2-epoxypropan, 3-(Perfluorobutyl)-1,2-epoxypropan, 3-(Perfluorohexyl)-1,2-epoxypropan, 4-(2,3-Epoxypropyl)morpholin, 1-(Oxiran-2-ylmethyl)pyrrolidin-2-on oder Mischungen daraus.

4. Verfahren nach einem der Ansprüche 1 bis 3 **dadurch gekennzeichnet, dass** mindestens ein Epoxid ausgewählt ist aus Ethylenoxid, Propylenoxid oder Mischungen daraus.

5. Verfahren nach Anspruch 4 **dadurch gekennzeichnet, dass** Ethylenoxid und Propylenoxid in einem molaren Verhältnis von 3:1 bis 1:3 eingesetzt werden.

6. Verfahren nach einem der Ansprüche 1 bis 5 **dadurch gekennzeichnet, dass** mindestens eine weitere Komponente ausgewählt aus cyclischen Anhydriden, CO₂, Glycidylethern, Lactonen oder Mischungen daraus mit umgesetzt wird.

7. Verfahren nach einem der Ansprüche 1 bis 6 **dadurch gekennzeichnet, dass** in einem ersten Schritt mindestens ein Epoxid in Gegenwart von mindestens einem Übergangsmetall-Katalysator und optional weiteren Komponenten mit Eugenol umgesetzt wird und in einem zweiten Schritt mindestens eine Umsetzung des Produktes aus Schritt 1 mit Si-H funktionellen Siloxanen erfolgt.

8. Verfahren nach Anspruch 7 **dadurch gekennzeichnet, dass** in dem zweiten Schritt eine Umsetzung des Produktes aus Schritt 1 und mindestens einer weiteren Komponente mit einer terminal ungesättigten Gruppe mit Si-H funktionellen Siloxanen erfolgt.

9. Produkt der Formel (I) 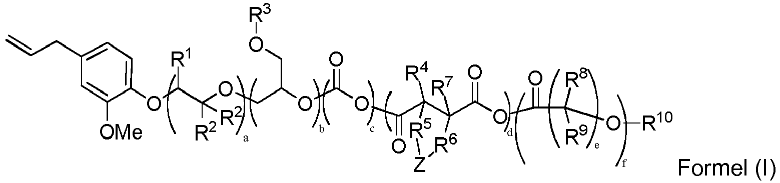 wobei
a = 1 bis 1000, bevorzugt 2 bis 500, besonders bevorzugt 3 bis 500, weiter bevorzugt größer 3 bis 100, insbesondere bevorzugt 4 bis 50,
b = 0 bis 1000, bevorzugt 1 bis 500, weiter bevorzugt größer 1 bis 200, insbesondere bevorzugt 0 bis 50,
c = 0 bis 1000, bevorzugt 1 bis 100, weiter bevorzugt größer 1 bis 80, insbesondere bevorzugt 0 bis 50,
d = 0 bis 1000, bevorzugt 1 bis 100, weiter bevorzugt größer 1 bis 80, insbesondere bevorzugt 0 bis 50
e = 1 bis 10,
f = 0 bis 500, bevorzugt 1 bis 300, besonders bevorzugt 2 bis 200 und insbesondere bevorzugt 0 bis 100 ist,
mit der Maßgabe, dass die Summe aus a + b + c + d + f größer gleich 3 sein muss und mit der Maßgabe, dass die Gruppen mit den Indices a, b, c, d, und f frei permutierbar über die Molekülkette sind, wobei die Gruppen mit den Indices c und d jeweils nicht auf sich selbst oder auf die jeweils andere Gruppe folgen dürfen
und mit der Maßgabe, dass die verschiedenen Monomereinheiten sowohl der Fragmente mit den Indices a, b und f untereinander blockweise aufgebaut sein können, wobei einzelne Blöcke auch mehrfach vorkommen können und untereinander statistisch verteilt sein können, oder aber einer statistischen Verteilung unterliegen und zudem untereinander frei permutierbar, im Sinne von in beliebiger Reihenfolge anzuordnen sind, mit der Einschränkung, dass die Gruppen mit den Indices c und d jeweils nicht auf sich selbst oder auf die jeweils andere Gruppe folgen dürfen,
und wobei
R¹ = unabhängig voneinander ein Wasserstoffradikal oder eine Alkylgruppe mit 1 bis 8 Kohlenstoffatomen, bevorzugt Wasserstoff, Methyl- oder Ethyl-, insbesondere bevorzugt Wasserstoff,
R² = unabhängig voneinander ein Wasserstoffradikal, eine Alkylgruppe mit 1 bis 20 Kohlenstoffatomen, eine Aryl- oder Alkarylgruppe, bevorzugt Wasserstoff, Methyl-, Ethyl-, Octyl-, Decyl-, Dodecyl-, Phenyl-, Benzyl-, besonders bevorzugt Wasserstoff, Methyl- oder Ethyl-,
oder R¹ und einer der Reste R² können gemeinsam einen Ring bilden, der die Atome, an die R¹ und R² gebunden sind, einschließt, bevorzugt enthält dieser Ring 5 bis 8 Kohlenstoffatome,
R³ = unabhängig voneinander ein gesättigter oder ungesättigter, aliphatischer oder aromatischer Kohlenwasserstoffrest mit 2 bis 30 C-Atomen, insbesondere bis 24 C-Atomen, der gegebenenfalls weiter substituiert ist,
R⁴, R⁷ = unabhängig voneinander Wasserstoff und/oder ein organischer Rest, bevorzugt Alkyl-, Alkenyl-, Alkyliden, Alkoxy-, Aryl- und/oder Aralkylgruppen, oder gegebenenfalls können R⁴ und/oder R⁷ auch nicht vorhanden sein, wobei wenn R⁴ und R⁷ nicht vorhanden sind, statt der Reste R⁴ und R⁷ eine C=C Doppelbindung vorhanden ist,
das überbrückende Fragment Z kann vorhanden oder nicht vorhanden sein,
ist das überbrückende Fragment Z nicht vorhanden so sind,
R⁵, R⁶ = unabhängig voneinander Wasserstoff und/oder ein organischer Rest, bevorzugt Alkyl-, Alkenyl-, Alkyliden, Alkoxy-, Aryl- und/oder Aralkylgruppen, wobei für den Fall, dass einer der Reste R⁴ oder R⁷ nicht vorhanden ist, der jeweilige geminale Rest (also R⁵ wenn R⁴ nicht vorhanden ist und R⁶ wenn R⁷ nicht vorhanden ist) ein Alkylidenrest, bevorzugt Methyliden (=CH₂), ist,
ist das überbrückende Fragment Z vorhanden, so sind
R⁵, R⁶ = Kohlenwasserstoffreste, die cycloaliphatisch oder aromatisch über das Fragment Z verbrückt sind, wobei Z einen divalenten Alkylen- oder Alkenylenrest darstellt, der weiter substituiert sein kann,
R¹⁰ = unabhängig voneinander ein Wasserstoffradikal oder eine Alkylgruppe mit 1 bis 8 Kohlenstoffatomen oder eine Estergruppe -C(O)-R¹¹ oder eine Acetoacetatgruppe -C(O)-CH₂-C(O)-R¹² oder eine Silylethergruppe -Si(R¹³)₃ oder eine Urethangruppe -C(O)-N-(R¹⁴)₂ mit
R¹¹, R¹², R¹³ = unabhängig voneinander eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe, und
R¹⁴ = unabhängig voneinander Wasserstoff und/oder eine lineare oder verzweigte, gesättigte oder ungesättigte, gegebenenfalls weiter substituierte Alkylgruppe mit 1 bis 30 Kohlenstoffatomen, eine Aryl- oder Alkarylgruppe,
bevorzugt handelt es sich bei R¹⁰ um Wasserstoff, eine Methylgruppe, einen AcetylGruppe oder eine Acetoacetat-Gruppe, insbesondere bevorzugt um Wasserstoff oder eine Acetylgruppe,
erhältlich durch ein Verfahren nach einem der Ansprüche 1 bis 6.

10. Produkt der Formel (II)
M_{g} M'ₕ Dᵢ D'ⱼ D"ₘ Tₖ Qₗ Formel (II)
mit
M = [R¹⁵₃SiO_{1/2}]
M' = [R¹⁶R¹⁵₂SiO_{1/2}]
D = [R¹⁵₂SiO_{2/2}]
D' = [R¹⁶R¹⁵SiO_{2/2}]
D" = [R¹⁷R¹⁵SiO_{2/2}]
T = [R¹⁵SiO_{3/2}]
Q = [SiO_{4/2}]
g = 0 - 20, bevorzugt 0 - 10, insbesondere bevorzugt 2,
h = 0 - 20, bevorzugt 0 - 10, insbesondere bevorzugt 0,
i = 0 - 1000, bevorzugt 0 - 500, insbesondere bevorzugt 0 - 200,
j = 0 - 20, bevorzugt 1 - 15, insbesondere bevorzugt 1 - 10,
k = 0 - 20, bevorzugt 0 - 10, insbesondere bevorzugt 0,
l = 0 - 20, bevorzugt 0 - 10, insbesondere bevorzugt 0,
m = 0 - 20, bevorzugt 1 - 15, insbesondere bevorzugt 1 - 10,
mit der Maßgabe, dass die Summe aus g + h + i + j + k + l + m größer gleich 3, sowie die Summe aus h + j ≥ 1 sein muss
und
R¹⁵ = unabhängig voneinander gleiche oder verschiedene Kohlenwasserstoffreste mit 1 - 16 Kohlenstoffatomen oder H, bevorzugt Methyl, Ethyl oder Phenyl, insbesondere bevorzugt Methyl,
R¹⁶ = unabhängig voneinander gleiche oder verschiedene Polyetherreste, mit der Maßgabe, dass mindestens 10 % der Reste Eugenol-basierten Polyetherreste sind, wobei die Eugenol- basierten Polyetherreste der allgemeinen Formel (III) 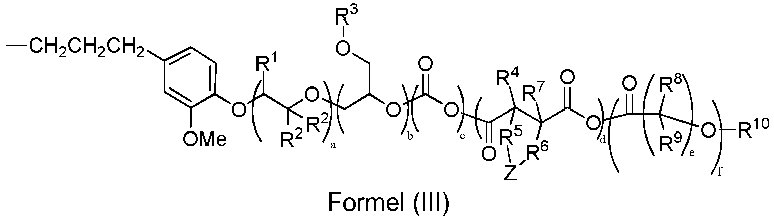
und nicht Eugenol-basierte Polyether Resten der allgemeinen Formel (IV), 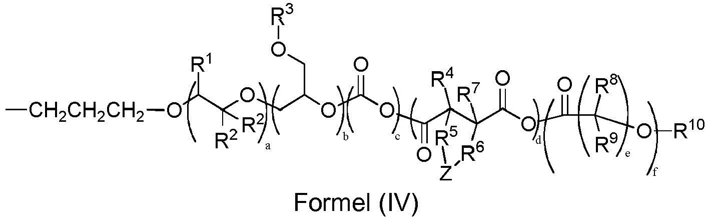 entsprechen, mit den Indices a-f und den Resten R¹-R¹⁰ wie zuvor definiert.
R¹⁷ = unabhängig voneinander gleiche oder verschiedene Kohlenwasserstoffreste mit 1 - 16 Kohlenstoffatomen die auch Heteroatome enthalten und weiter substituiert sein können, bevorzugt handelt es sich um SiC-verknüpfte Reste resultierend aus Allylglycidether, Glycerinmonoallylether, Allylanisol, Eugenol, Hexenol, Hexadecen und Undecylensäuremethylester, insbesondere bevorzugt Hexadecen, Eugenol und Glycerinmonoallylether erhältlich durch ein Verfahren nach einem der Ansprüche 7 oder 8.

11. Produkt nach einem der Ansprüche 9 oder 10 **dadurch gekennzeichnet, dass** in den Formeln (I), (II), (III) und (IV) das Fragment mit dem Index b ausgewählt ist aus Methylglycidylether, Ethylglycidylether, Propylglycidylether, Butyl-glycidylether, iso-Butyl-lycidylether, tert-Butylglycidylether, 2-Pentylglycidyl-ether, 3-Pentylglycidylether, 2-Methylbutylglycidylether, 3-Methylbutyl-glycidylether, 2-Methyl-2-butylglycidylether, 3-Methyl-2-butylglycidylether, 2,2-Dimethylpropylglycidylether, Hexylglycidylether, Heptylglycidylether, Octylglycidylether, 2-Ethylhexylglycidylether, 2-Propylheptylglycidylether, 2-Butyloctanylglycidylether, 2-Methylundecylglycidylether, 2-Propylnonyl-glycidylether, 2-Ethyldecylglycidylether, 2-Pentylheptylglycidylether, 2-Hexyldecylglycidylether, 2-Butyltetradecylglycidylether, 2-Dodecylhexadecylglycidylether, 2-Tetradecyloctadecylglycidylether, 3,5,5-Trimethylhexyl-glycidylether, Isononanylglycidylether, Isotridecylglycidylether, Isomyristylglycidylether, Isostearylglycidylether, 2-Octyldodecylglycidylether, Triphenylmethylglycidylether, C(O)-(CH₂)₅-C-(CH₃)₃glycidylether, C₁₂/C₁₄-Alkyl-glycidylether, Phenylglycidylether, Kresylglycidylether, tert-Butylphenylglycidylether, Benzylglycidylether, 3-Glycidyloxypropyl-trimethoxysilan, 3-Glycidyloxypropyltriethoxysilan, 3-Glycidyloxypropyl-tripropoxysilan, 3-Glycidyloxypropyltriisopropoxysilan, Bis(3-Glycidyloxypropyl)dimethoxysilan, Bis(3-Glycidyloxypropyl)diethoxysilan, 3-Glycidyloxyhexyltrimethoxysilan, 3-Glycidyloxyhexyltriethoxysilan, 3-Glycidyloxypropylmethyl-dimethoxysilan, 3-Glycidyloxypropyl-ethyl-diethoxysilan und Mischungen daraus.

12. Verwendung von Produkten nach Anspruch 9 als grenzflächenaktive Substanz.

13. Verwendung von Produkten nach Anspruch 9 als Dispergieradditiv.

14. Verwendung von Produkten nach Anspruch 10 als grenzflächenaktive Substanz.

15. Verwendung von Produkten nach Anspruch 10 als Dispergieradditiv.

## Claims

1. Process for producing alkoxylation products, wherein at least one epoxide is reacted with eugenol in the presence of at least one transition metal catalyst.

2. Process according to Claim 1, **characterized in that** at least one transition metal catalyst is a double metal cyanide catalyst.

3. Process according to either of Claims 1 and 2, wherein at least one epoxide is selected from ethylene oxide, propylene oxide, isobutylene oxide, epichlorohydrin, 2,3-epoxy-1-propanol, butylene oxide, 2,3-epoxybutane, 2,3-dimethyl-2,3-epoxybutane, 1,2-epoxypentane, 1,2-epoxy-3-methylpentane, 1,2-epoxyhexane, 1,2-epoxycyclohexane, 1,2-epoxyheptane, 1,2-epoxyoctane, 1,2-epoxynonane, 1,2-epoxydecane, 1,2-epoxyundecane, 1,2-epoxydodecane, styrene oxide, 1,2-epoxycyclopentane, 1,2-epoxycyclohexane, vinylcyclohexene oxide, (2,3-epoxypropyl)benzene, vinyloxirane, 3-phenoxy-1,2-epoxypropane, 2,3-epoxy methyl ether, 2,3-epoxy ethyl ether, 2,3-epoxy isopropyl ether, 3,4-epoxybutyl stearate, 4,5-epoxypentyl acetate, 2,3-epoxypropane methacrylate, 2,3-epoxypropane acrylate, glycidyl butyrate, methyl glycidate, ethyl 2,3-epoxybutanoate, 4-(trimethylsilyl)butane 1,2-epoxide, 4-(triethylsilyl)butane 1,2-epoxide, 3-(perfluoromethyl)-1,2-epoxypropane, 3-(perfluoroethyl)-1,2-epoxypropane, 3-(perfluorobutyl)-1,2-epoxypropane, 3-(perfluorohexyl)-1,2-epoxypropane, 4-(2,3-epoxypropyl)morpholine, 1-(oxiran-2-ylmethyl)pyrrolidin-2-one or mixtures thereof.

4. Process according to any of Claims 1 to 3, **characterized in that** at least one epoxide is selected from ethylene oxide, propylene oxide or mixtures thereof.

5. Process according to Claim 4, **characterized in that** ethylene oxide and propylene oxide are employed in a molar ratio of from 3:1 to 1:3.

6. Process according to any of Claims 1 to 5, **characterized in that** it comprises co-reacting at least one further component selected from cyclic anhydrides, CO₂, glycidyl ethers, lactones or mixtures thereof.

7. Process according to any of Claims 1 to 6, **characterized in that** it comprises a first step wherein at least one epoxide is reacted with eugenol in the presence of at least one transition metal catalyst and optionally further components and a second step wherein at least one reaction of the product from step 1 with Si-H functional siloxanes is performed.

8. Process according to Claim 7, **characterized in that** in the second step the product from step 1 and at least one further component comprising a terminally unsaturated group are reacted with Si-H functional siloxanes.

9. Product of formula (I) 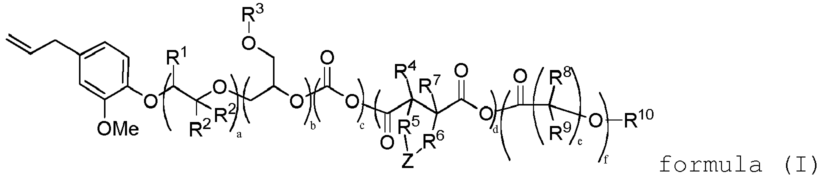 where
a = 1 to 1000, preferably 2 to 500, particularly preferably 3 to 500, more preferably greater than 3 to 100, especially preferably 4 to 50,
b = 0 to 1000, preferably 1 to 500, more preferably greater than 1 to 200, especially preferably 0 to 50,
c = 0 to 1000, preferably 1 to 100, more preferably greater than 1 to 80, especially preferably 0 to 50,
d = 0 to 1000, preferably 1 to 100, more preferably greater than 1 to 80, especially preferably 0 to 50,
e = 1 to 10,
f = 0 to 500, preferably 1 to 300, particularly preferably 2 to 200 and especially preferably 0 to 100,
with the proviso that the sum of a + b + c + d + f is not less than 3 and
with the proviso that the groups with the indices a, b, c, d, and f are freely permutable over the molecule chain and neither of the groups with the indices c and d may follow itself or the respective other group
and with the proviso that the different monomer units and the fragments with the indices a, b and f may be in a blockwise structure with one another, where individual blocks may also occur multiple times and may be randomly distributed among one another, or else are subject to a random distribution and further are freely permutable with one another, in the sense that they may be arranged in any desired sequence, subject to the restriction that neither of the groups with the indices c and d may follow itself or the respective other group,
and where
R¹ = independently at each occurrence a hydrogen radical or a C₁-C₈ alkyl group, preferably hydrogen, methyl or ethyl, especially preferably hydrogen,
R² = independently at each occurrence a hydrogen radical, a C₁-C₂₀ alkyl group, an aryl or alkaryl group, preferably hydrogen, methyl, ethyl, octyl, decyl, dodecyl, phenyl, benzyl, more preferably hydrogen, methyl or ethyl,
or R¹ and one of the radicals R² may together form a ring which includes the atoms to which R¹ and R² are bonded, this ring preferably comprising 5 to 8 carbon atoms,
R³ = independently at each occurence a saturated or unsaturated, aliphatic or aromatic, hydrocarbon radical comprising 2 to 30 carbon atoms, in particular up to 24 carbon atoms, which is optionally further substituted,
R⁴, R⁷ = independently at each occurrence hydrogen and/or an organic radical, preferably alkyl, alkenyl, alkylidene, alkoxy, aryl and/or aralkyl groups, or else optionally R⁴ and/or R⁷ may be absent, where, when R⁴ and R⁷ are absent, there is a C=C double bond in place of the radicals R⁴ and R⁷,
the bridging fragment Z may be present or absent;
when the bridging fragment Z is absent, then
R⁵, R⁶ = independently at each occurrence hydrogen and/or an organic radical, preferably alkyl, alkenyl, alkylidene, alkoxy, aryl and/or aralkyl groups, where, when one of the radicals R⁴ or R⁷ is absent, the respective geminal radical (i.e. R⁵ when R⁴ is absent and R⁶ when R⁷ is absent) is an alkylidene radical, preferably methylidene (= CH₂);
when the bridging fragment Z is present, then
R⁵, R⁶ = hydrocarbon radicals which are bridged cycloaliphatically or aromatically via fragment Z, where Z represents a divalent alkylene or alkenylene radical which may be further substituted,
R¹⁰ = independently at each occurence a hydrogen radical or a C₁-C₈ alkyl group or an ester group -C(O)-R¹¹ or an acetoacetate group -C(O)-CH₂-C(O)-R¹² or a silyl ether group -Si(R¹³)₃ or a urethane group - C(O)-N-(R¹⁴)₂ where
R¹¹, R¹², R¹³ = independently at each occurrence a linear or branched, saturated or unsaturated, optionally further substituted C₁-C₃₀ alkyl group, an aryl or alkaryl group, and
R¹⁴ = independently at each occurence hydrogen and/or a linear or branched, saturated or unsaturated, optionally further substituted C₁-C₃₀ alkyl group, an aryl or alkaryl group,
R¹⁰ is preferably hydrogen, a methyl group, an acetyl group or an acetoacetate group, more preferably hydrogen or an acetyl group,
obtainable by a process according to any of Claims 1 to 6.

10. Product of formula (II)
M_{g}M'ₕDᵢD'ⱼD"ₘTₖQₗ formula (II)
where
M = [R¹⁵₃SiO_{1/2}]
M' = [R¹⁶R¹⁵₂SiO_{1/2}]
D = [R¹⁵₂SiO_{2/2}]
D' = [R¹⁶R¹⁵SiO_{2/2}]
D" = [R¹⁷R¹⁵SiO_{2/2}]
T = [R¹⁵SiO_{3/2}]
Q = [S1O_{4/2}]
g = 0-20, preferably 0-10, more preferably 2,
h = 0-20, preferably 0-10, more preferably 0,
i = 0-1000, preferably 0-500, more preferably 0-200, j = 0-20, preferably 1-15, more preferably 1-10,
k = 0-20, preferably 0-10, more preferably 0,
1 = 0-20, preferably 0-10, more preferably 0,
m = 0-20, preferably 1-15, more preferably 1-10,
with the proviso that the sum of g + h + i + j + k + 1 + m is not less than 3 and that the sum of h + j ≥ 1 and
R¹⁵ = independently at each occurence identical or different C₁-C₁₆ hydrocarbon radicals, or H, preferably methyl, ethyl or phenyl, more preferably methyl,
R¹⁶ = independently at each occurence identical or different polyether radicals, with the proviso that at least 10% of the radicals are eugenol-based polyether radicals, where the eugenol-based polyether radicals correspond to general formula (III) 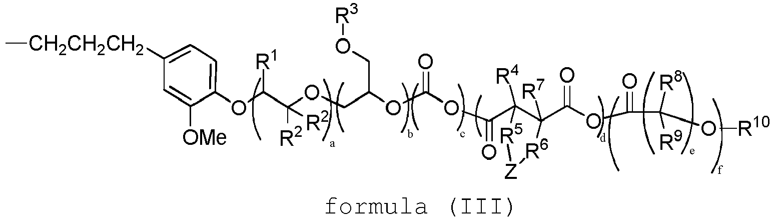
and non-eugenol-based polyether radicals correspond to general formula (IV), 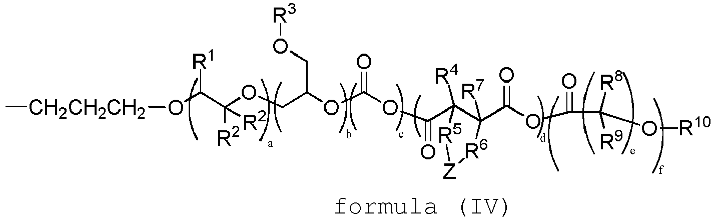 where the indices a-f and the radicals R¹-R¹⁰ are as defined above,
R¹⁷ = independently at each occurrence identical or different C₁-C₁₆ hydrocarbon radicals which also comprise heteroatoms and may be further substituted, preferably concerned are SiC-linked radicals resulting from allyl glycidic ether, glycerol monoallyl ether, allylanisole, eugenol, hexenol, hexadecene and methyl undecylenate, more preferably hexadecene, eugenol and glycerol monoallyl ether obtainable by a process according to either of Claims 7 and 8.

11. Product according to either of Claims 9 and 10, **characterized in that** in the formulae (I), (II), (III) and (IV) the fragment with the index b is selected from methyl glycidyl ether, ethyl glycidyl ether, propyl glycidyl ether, butyl glycidyl ether, isobutyl glycidyl ether, tert-butyl glycidyl ether, 2-pentyl glycidyl ether, 3-pentyl glycidyl ether, 2-methylbutyl glycidyl ether, 3-methylbutyl glycidyl ether, 2-methyl-2-butyl glycidyl ether, 3-methyl-2-butyl glycidyl ether, 2,2-dimethylpropyl glycidyl ether, hexyl glycidyl ether, heptyl glycidyl ether, octyl glycidyl ether, 2-ethylhexyl glycidyl ether, 2-propylheptyl glycidyl ether, 2-butyloctanyl glycidyl ether, 2-methylundecyl glycidyl ether, 2-propylnonyl glycidyl ether, 2-ethyldecyl glycidyl ether, 2-pentylheptyl glycidyl ether, 2-hexyldecyl glycidyl ether, 2-butyltetradecyl glycidyl ether, 2-dodecylhexadecyl glycidyl ether, 2-tetradecyloctadecyl glycidyl ether, 3,5,5-trimethylhexyl glycidylether, isononanyl glycidyl ether, isotridecyl glycidyl ether, isomyristyl glycidyl ether, isostearyl glycidyl ether, 2-octyldodecyl glycidyl ether, triphenylmethyl glycidylether, C(O)-(CH₂)₅-C-(CH₃)₃ glycidyl ether, C₁₂/C₁₄-alkyl glycidyl ether, phenyl glycidyl ether, cresyl glycidyl ether, tert-butylphenyl glycidyl ether, benzyl glycidyl ether, 3-glycidyloxypropyl-trimethoxysilan, 3-glycidyloxypropyltriethoxysilane, 3-glycidyloxypropyltripropoxysilane, 3-glycidyloxypropyltriisopropoxysilane, bis(3-glycidyloxypropyl)dimethoxysilane, bis(3-glycidyloxypropyl)diethoxysilane, 3-glycidyloxyhexyltrimethoxysilane, 3-glycidyloxyhexyltriethoxysilane, 3-glycidyloxypropylmethyldimethoxysilane, 3-glycidyloxypropylethyldiethoxysilane and mixtures thereof.

12. Use of products according to Claim 9 as a surfactant.

13. Use of products according to Claim 9 as a dispersing additive.

14. Use of products according to Claim 10 as a surfactant.

15. Use of products according to Claim 10 as a dispersing additive.

## Revendications

1. Procédé de fabrication de produits d'alcoxylation, selon lequel au moins un époxyde est mis en réaction avec de l'eugénol en présence d'au moins un catalyseur de métal de transition.

2. Procédé selon la revendication 1, **caractérisé en ce qu'**au moins un catalyseur de métal de transition est un catalyseur de cyanure de deux métaux.

3. Procédé selon l'une quelconque des revendications 1 ou 2, selon lequel au moins un époxyde est choisi parmi l'oxyde d'éthylène, l'oxyde de propylène, l'oxyde d'isobutylène, l'épichlorhydrine, le 2,3-époxy-1-propanol, l'oxyde de butylène, le 2,3-époxybutane, le 2,3-diméthyl-2,3-époxybutane, le 1,2-époxypentane, le 1,2-époxy-3-méthylpentane, le 1,2-époxyhexane, le 1,2-époxycyclohexane, le 1,2-époxyheptane, le 1,2-époxyoctane, le 1,2-époxynonane, le 1,2-époxydécane, le 1,2-époxyundécane, le 1,2-époxydodécane, l'oxyde de styrène, le 1,2-époxycyclopentane, le 1,2-époxycyclohexane, l'oxyde de vinylcyclohexène, le (2,3-époxypropyl)benzène, le vinyloxirane, le 3-phénoxy-1,2-époxypropane, l'éther 2,3-époxyméthylique, l'éther 2,3-époxyéthylique, l'éther 2,3-époxylisopropylique, le stéarate de 3,4-époxybutyle, l'acétate de 4,5-époxypentyle, le méthacrylate de 2,3-époxypropane, l'acrylate de 2,3-époxypropane, le butyrate de glycidyle, le glycidate de méthyle, le 2,3-époxybutanoate d'éthyle, le 4-(triméthylsilyl)butane-1,2-époxyde, le 4-(triéthylsilyl)butane-1,2-époxyde, le 3-(perfluorométhyl)-1,2-époxypropane, le 3-(perfluoroéthyl)-1,2-époxypropane, le 3-(perfluorobutyl)-1,2-époxypropane, le 3-(perfluorohexyl)-1,2-époxypropane, la 4-(2,3-époxypropyl)morpholine, la 1-(oxiran-2-ylméthyl)pyrrolidin-2-one ou leurs mélanges.

4. Procédé selon l'une quelconque des revendications 1 à 3, **caractérisé en ce qu'**au moins un époxyde est choisi parmi l'oxyde d'éthylène, l'oxyde de propylène ou leurs mélanges.

5. Procédé selon la revendication 4, **caractérisé en ce que** de l'oxyde d'éthylène et de l'oxyde de propylène sont utilisés en un rapport molaire de 3:1 à 1:3.

6. Procédé selon l'une quelconque des revendications 1 à 5, **caractérisé en ce qu'**au moins un autre composant choisi parmi les anhydrides cycliques, le CO₂, les éthers glycidyliques, les lactones ou leurs mélanges est mis en réaction.

7. Procédé selon l'une quelconque des revendications 1 à 6, **caractérisé en ce que**, lors d'une première étape, au moins un époxyde est mis en réaction avec de l'eugénol en présence d'au moins un catalyseur de métal de transition et éventuellement d'autres composants et, lors d'une deuxième étape, au moins une réaction du produit de l'étape 1 avec des siloxanes à fonction Si-H a lieu.

8. Procédé selon la revendication 7, **caractérisé en ce que**, lors de la deuxième étape, une réaction du produit de l'étape 1 et d'au moins un autre composant contenant un groupe terminal insaturé avec des siloxanes à fonction Si-H a lieu.

9. Produit de formule (I) : 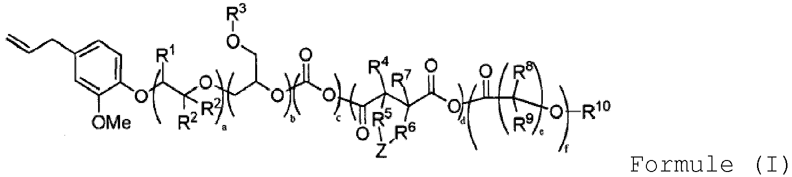 dans laquelle
a = 1 à 1 000, de préférence 2 à 500, de manière particulièrement préférée 3 à 500, de manière davantage préférée plus de 3 à 100, de manière notamment préférée 4 à 50,
b = 0 à 1 000, de préférence 1 à 500, de manière davantage préférée plus de 1 à 200, de manière notamment préférée 0 à 50,
c = 0 à 1 000, de préférence 1 à 100, de manière davantage préférée plus de 1 à 80, de manière notamment préférée 0 à 50,
d = 0 à 1 000, de préférence 1 à 100, de manière davantage préférée plus de 1 à 80, de manière notamment préférée 0 à 50,
e = 1 à 10,
f = 0 à 500, de préférence 1 à 300, de manière particulièrement préférée 2 à 200, et de manière notamment préférée 0 à 100,
à condition que la somme de a+b+c+d+f soit supérieure ou égale à 3, et
à condition que les groupes munis des indices a, b, c, d et f puissent être librement permutés dans la chaîne moléculaire, les groupes munis des indices c et d ne pouvant chacun pas se suivre eux-mêmes ou suivre l'autre groupe respectif,
et à condition que les différentes unités monomères aussi bien des fragments munis des indices a, b et f puissent être assemblées entre elles séquentiellement, des séquences individuelles pouvant également être présentes à plusieurs reprises et pouvant être distribuées statistiquement les unes parmi les autres, ou soient soumises à une distribution statistique et puissent en outre être librement permutées les unes avec les autres, au sens d'un agencement dans un ordre quelconque, avec comme restriction que les groupes munis des indices c et d ne peuvent chacun pas se suivre eux-mêmes ou suivre l'autre groupe respectif,
et dans laquelle
les R¹ = indépendamment les uns des autres, un radical hydrogène ou un groupe alkyle de 1 à 8 atomes de carbone, de préférence hydrogène, méthyle ou éthyle, de manière notamment préférée hydrogène,
les R² = indépendamment les uns des autres, un radical hydrogène, un groupe alkyle de 1 à 20 atomes de carbone, un groupe aryle ou alkaryle, de préférence hydrogène, méthyle, éthyle, octyle, décyle, dodécyle, phényle, benzyle, de manière particulièrement préférée hydrogène, méthyle ou éthyle,
ou R¹ et un des radicaux R² peuvent former ensemble un cycle, qui comprend les atomes auxquels R¹ et R² sont reliés, ce cycle contenant de préférence 5 à 8 atomes de carbone,
les R³ = indépendamment les uns des autres, un radical hydrocarboné saturé ou insaturé, aliphatique ou aromatique, de 2 à 30 atomes C, notamment de jusqu'à 24 atomes C, qui est éventuellement davantage substitué,
R⁴, R⁷ = indépendamment les uns des autres, l'hydrogène et/ou un radical organique, de préférence des groupes alkyle, alcényle, alkylidène, alcoxy, aryle et/ou aralkyle, ou R⁴ et/ou R⁷ peuvent éventuellement également ne pas être présents, une double liaison C=C étant présente au lieu des radicaux R⁴ et R⁷ lorsque R⁴ et R⁷ ne sont pas présents,
le fragment pontant Z peut être présent ou ne pas être présent,
si le fragment pontant Z n'est pas présent,
R⁵, R⁶ = indépendamment les uns des autres, l'hydrogène et/ou un radical organique, de préférence des groupes alkyle, alcényle, alkylidène, alcoxy, aryle et/ou aralkyle ; lorsqu'un des radicaux R⁴ ou R⁷ n'est pas présent, le radical géminal correspondant (c'est-à-dire R⁵ lorsque R⁴ n'est pas présent et R⁶ lorsque R⁷ n'est pas présent) étant un radical alkylidène, de préférence méthylidène (=CH₂),
si le fragment pontant Z est présent,
R⁵, R⁶ = des radicaux hydrocarbonés, qui sont pontés cycloaliphatiquement ou aromatiquement par le fragment Z, Z représentant un radical alkylène ou alcénylène bivalent, qui peut être davantage substitué,
les R¹⁰ = indépendamment les uns des autres, un radical hydrogène ou un groupe alkyle de 1 à 8 atomes de carbone, ou un groupe ester -C(O)-R¹¹ ou un groupe acétoacétate -C(O)-CH₂-C(O)-R¹² ou un groupe éther silylique -Si(R¹³)₃, ou un groupe uréthane -C(O)-N-(R¹⁴)₂, avec
R¹¹, R¹², R¹³ = indépendamment les uns des autres, un groupe alkyle linéaire ou ramifié, saturé ou insaturé, éventuellement davantage substitué, de 1 à 30 atomes de carbone, un groupe aryle ou alkaryle, et
les R¹⁴ = indépendamment les uns des autres, l'hydrogène et/ou un groupe alkyle linéaire ou ramifié, saturé ou insaturé, éventuellement davantage substitué, de 1 à 30 atomes de carbone, un groupe aryle ou alkaryle,
R¹⁰ consistant de préférence en un hydrogène, un groupe méthyle, un groupe acétyle ou un groupe acétoacétate, de manière notamment préférée en un hydrogène ou un groupe acétyle,
pouvant être obtenu par un procédé selon l'une quelconque des revendications 1 à 6.

10. Produit de formule (II)
M_{g}M'ₕDᵢD'ⱼD"ₘTₖQₗ Formule (II)
avec
M = [R¹⁵₃SiO_{1/2}]
M' = [R¹⁶R¹⁵₂SiO_{1/2}]
D = [R¹⁵₂SiO_{2/2}]
D' = [R¹⁶R¹⁵SiO_{2/2}]
D*''* = [R¹⁷R¹⁵SiO_{2/2}]
T = [R¹⁵SiO_{3/2}]
Q = [SiO_{4/2}]
g = 0 à 20, de préférence 0 à 10, de manière particulièrement préférée 2,
h = 0 à 20, de préférence 0 à 10, de manière particulièrement préférée 0,
i = 0 à 1 000, de préférence 0 à 500, de manière particulièrement préférée 0 à 200,
j = 0 à 20, de préférence 1 à 15, de manière particulièrement préférée 1 à 10,
k = 0 à 20, de préférence 0 à 10, de manière particulièrement préférée 0,
1 = 0 à 20, de préférence 0 à 10, de manière particulièrement préférée 0,
m = 0 à 20, de préférence 1 à 15, de manière particulièrement préférée 1 à 10,
à condition que la somme de g+h+i+j+k+l+m soit supérieure ou égale à 3, et que la somme de h+j soit ≥ 1,
et
les R¹⁵ = indépendamment les uns des autres, des radicaux hydrocarbonés identiques ou différents, de 1 à 16 atomes de carbone ou H, de préférence méthyle, éthyle ou phényle, de manière particulièrement préférée méthyle,
les R¹⁶ = indépendamment les uns des autres, des radicaux polyéther identiques ou différents, à condition qu'au moins 10 % des radicaux soient des radicaux polyéther à base d'eugénol, les radicaux polyéther à base d'eugénol correspondant à la formule générale (III) 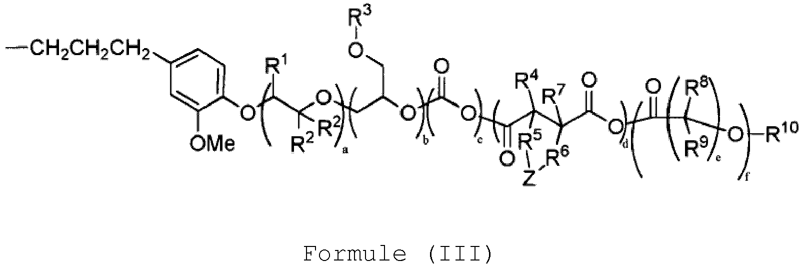 et les radicaux polyéther non à base d'eugénol correspondant à la formule générale (IV) 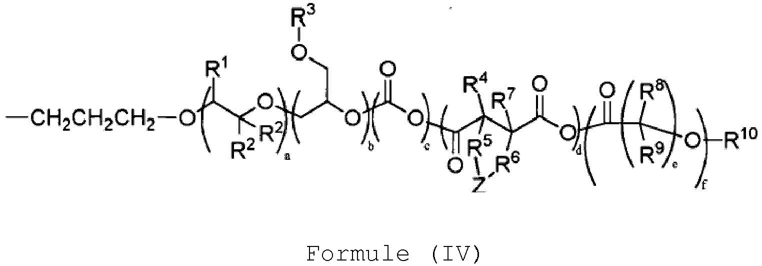 avec les indices a à f et les radicaux R¹ à R¹⁰ tels que définis précédemment,
les R¹⁷ = indépendamment les uns des autres, des radicaux hydrocarbonés identiques ou différents, de 1 à 16 atomes de carbone, qui peuvent également contenir des hétéroatomes et être davantage substitués, de préférence des radicaux reliés à SiC résultant d'éther d'allylglycidyle, d'éther monoallylique de glycérine, d'allylanisole, d'eugénol, d'hexénol, d'hexadécène et d'ester méthylique de l'acide undécylénique, de manière particulièrement préférée d'hexadécène, d'eugénol et d'éther monoallylique de glycérine, pouvant être obtenu par un procédé selon l'une quelconque des revendications 7 ou 8.

11. Produit selon l'une quelconque des revendications 9 ou 10, **caractérisé en ce que**, dans les formules (I), (II), (III) et (IV), le fragment muni de l'indice b est choisi parmi l'éther méthylglycidylique, l'éther éthylglycidylique, l'éther propylglycidylique, l'éther butylglycidylique, l'éther iso-butylglycidylique, l'éther tert-butylglycidylique, l'éther 2-pentylglycidylique, l'éther 3-pentylglycidylique, l'éther 2-méthylbutylglycidylique, l'éther 3-méthylbutylglycidylique, l'éther 2-méthyl-2-butylglycidylique, l'éther 3-méthyl-2-butylglycidylique, l'éther 2,2-diméthylpropylglycidylique, l'éther hexylglycidylique, l'éther heptylglycidylique, l'éther octylglycidylique, l'éther 2-éthylhexylglycidylique, l'éther 2-propylheptylglycidylique, l'éther 2-butyloctanylglycidylique, l'éther 2-méthylundécylglycidylique, l'éther 2-propylnonylglycidylique, l'éther 2-éthyldécylglycidylique, l'éther 2-pentylheptylglycidylique, l'éther 2-hexyldécylglycidylique, l'éther 2-butyltétradécylglycidylique, l'éther 2-dodécylhexadécylglycidylique, l'éther 2-tétradécyloctadécylglycidylique, l'éther 3,5,5-triméthylhexylglycidylique, l'éther isononanylglycidylique, l'éther isotridécylglycidylique, l'éther isomyristylglycidylique, l'éther isostéarylglycidylique, l'éther 2-octyldodécylglycidylique, l'éther triphénylméthylglycidylique, l'éther C(O)-(CH₂)₅-C-(CH₃)₃-glycidylique, l'éther alkyle en C₁₂/C₁₄-glycidylique, l'éther phénylglycidylique, l'éther crésylglycidylique, l'éther tert-butylphénylglycidylique, l'éther benzylglycidylique, le 3-glycidyloxypropyl-triméthoxysilane, le 3-glycidyloxypropyltriéthoxysilane, le 3-glycidyloxypropyl-tripropoxysilane, le 3-glycidyloxypropyltriisopropoxysilane, le bis(3-glycidyl-oxypropyl)diméthoxysilane, le bis(3-glycidyloxypropyl)diéthoxysilane, le 3-glycidyloxyhexyltriméthoxysilane, le 3-glycidyloxyhexyltriéthoxysilane, le 3-glycidyloxypropylméthyldiméthoxysilane, le 3-glycidyloxypropyléthyldiéthoxysilane et leurs mélanges.

12. Utilisation de produits selon la revendication 9 en tant que substance tensioactive.

13. Utilisation de produits selon la revendication 9 en tant qu'additif de dispersion.

14. Utilisation de produits selon la revendication 10 en tant que substance tensioactive.

15. Utilisation de produits selon la revendication 10 en tant qu'additif de dispersion.
